Europäisches Patentamt

European Patent Office

Office européen des brevets

(19)

(11) **EP 0 624 300 B1**

(12) **EUROPEAN PATENT SPECIFICATION**

(45) Date of publication and mention
of the grant of the patent:
**23.09.1998 Bulletin 1998/39**

(21) Application number: **94902439.2**

(22) Date of filing: **29.11.1993**

(51) Int Cl.[6]: **H04N 1/40**

(86) International application number:
**PCT/US93/11519**

(87) International publication number:
**WO 94/13098 (09.06.1994 Gazette 1994/13)**

(54) **RESOLUTION ENHANCEMENT SYSTEM FOR BINARY IMAGES**

Auflösungserhöhungssystem für binäre Bilder

SYSTEME D'AMELIORATION DE LA RESOLUTION POUR IMAGES BINAIRES

(84) Designated Contracting States:
**DE FR GB**

(30) Priority: **30.11.1992 US 983155**
**30.11.1992 US 983169**

(43) Date of publication of application:
**17.11.1994 Bulletin 1994/46**

(73) Proprietor: **EASTMAN KODAK COMPANY**
**Rochester, New York 14650 (US)**

(72) Inventors:
• **NG, Yee, Seung**
**Fairport, NY 14450 (US)**
• **YEH, Hurjay**
**Rochester, NY 14616 (US)**

• **PICKUP, Michael, Alan**
**Rochester, NY 14620 (US)**

(74) Representative: **Blickle, K. Werner, Dipl.-Ing. et al**
**KODAK AKTIENGESELLSCHAFT**
**Patentabteilung**
**70323 Stuttgart (DE)**

(56) References cited:
**EP-A- 0 199 502**          **EP-A- 0 234 590**
**US-A- 5 029 108**

• **IBM TECHNICAL DISCLOSURE BULLETIN vol.**
**28, no. 12 , May 1986 pages 5634 - 5637 'FAST**
**ONE PIXEL EDGE DETECTOR'**

## Description

<u>Field of the Invention</u>

The invention relates generally to digital image processing and, more specifically, to a digital image processing system for enhancing the edge characteristics of printed or displayed images that are generated from low resolution image files that include binary image data alone or a mixture of binary and gray-scale data.

<u>Background</u>

Edge or line jaggedness is a common problem associated with the printing of low resolution binary image data. Efforts have been made to reduce or overcome line jaggedness using template matching methods that are applied to low resolution bitmaps as described in U.S. Patent 5,005,139 or, alternatively, through the use of an outline extraction method like that described in the article entitled "Image Makers", by Henry Bortman, MacUser, November 1991, pages 98-103. Both of the above-referenced methods use a low resolution bitmap as an input file and both methods perform digital processing operations on the low resolution bitmap to produce an enhanced image output file. The enhanced output file is supplied to the printhead or a printer to produce a hard copy of the image.

There are disadvantages, however, to both of the template matching and outline extraction methods of edge enhancement discussed above. In the template matching method, the number of templates that can be employed must be limited in order to maintain acceptable processing speeds. If a pattern within the bitmap data contained in the input file does not happen to match one of the available templates, an edge resolution enhancement operation cannot be performed regardless of the quality of the image that will be produced from the input data. In the outline extraction method, variable dot sizes are used to "fill in" and match a character's outline. The fill in process, however, can be difficult when small fonts are employed. In addition, the outline extraction method tends to broaden thin graph lines that are spaced close together which results in the merger of multiple lines and a perceivable reduction in the resolution of the printed image.

U.S.-A-5 029 108 discloses an image-processing apparatus and method for grey scale enhancement of binary image data. The method uses a multitude of stored gradient masks each associated with a type of pixel edge pattern. A matrix of image data pixels including the central pixel or pixel under consideration for enhancement is convolved with each gradient mask. Each convolution operation yields a number. Each gradient mask is associated with a specific number. Thus, if the matrix is convolved with a gradient mask and the convolution results in the number associated with that gradient mask, it is indicative of the pixel edge pattern associated with that gradient mask and the direction of gradient change. A convolution yielding a number not associated with a gradient mask implies that no enhancement is to occur. If a pixel edge pattern or segments is detected, a segment change detection operation is provided. This operation determines if prior and succeeding scan lines indicate whether or not there is a change in the edge segment in the prior and succeeding scan lines. If there is a segment change, a code representing the segment type and segment change location are input to an address generator that generates an address to a lookup table ROM. The ROM generates a modification signal for modifying the pixel under consideration of the sample matrix dependent upon the type of transition detected.

EP-A-0 234 590 discloses image processing of 4-bits per pixel image data. A window of 9 pixels is input to a first high resolving circuit 12 and a linear edge detecting circuit 13. Circuit 12 increases resolution of the central pixel based on grey level of the central pixel with consideration of a thresholded value associated with surrounding pixels. The linear edge detector circuit 13 determines if the central pixel is part of a linear edge. A 3x3 window of pixels is examined and gradation differences are determined between spaced pixels. If differences exceed predetermined respective values for selected pairs of pixels, the window is determined to contain a linear edge. In EP-A-0 234 590, grey level data is also provided with binary higher resolution enhancement. Thus, there is no sorting of mixed data to generate sorted binary image data.

Another drawback to the above-described processes is that they tend to have a negative impact on the gray scale halftone data. Thus, the processes are not particularly well suited for processing mixed image data files containing both binary image data and gray-scale halftone image data. Mixed data files, however, are becoming more and more common. Many imaging systems, for example, now combine text data with gray-scale halftoned image data and binary graphic data in a single image.

It is an object of the invention to provide a method and apparatus for providing edge enhancement using a low resolution bitmap as an input file without suffering the resolution degradation associated with the outline extraction method and the drawbacks of the template matching outlined above.

It is also an object of the invention to provide a system for providing edge enhancement of mixed image files containing both binary image data and gray-scale image data without adversely affecting the gray-scale image data.

<u>SUMMARY OF THE INVENTION</u>

In accordance with one aspect of the invention, there is provided an image processing system comprising: means for storing a binary bitmap image file including a plurality of pixel locations; means for determining a gradient magnitude corresponding to each pixel location of the binary bitmap image file; means for determining a gradient direction corresponding to each pixel location of the binary bitmap image file; decision matrix means for comparing a window of the binary bitmap image file and the gradient magnitudes and directions corresponding thereto to predetermined sets of criteria and means responsive to said decision matrix means for generating enhanced gray-scale image data.

In accordance with another aspect of the invention, there is provided a method of providing edge enhancement of binary image data comprising the steps of storing a binary bitmap image file including a plurality of pixel locations; determining a gradient magnitude corresponding to each pixel location of the binary bitmap image file; determining a gradient direction corresponding to each pixel location of the binary bitmap image file; comparing a window of the binary bitmap image file and the gradient magnitudes and directions corresponding thereto to predetermined sets of criteria and in response to the comparing, generating enhanced gray-scale image data.

In accordance with a third aspect of the invention, there is provided an image processing system comprising: means for storing mixed image data including binary image data and gray-scale image data; means for sorting the mixed image data to generate sorted binary image data; means for performing edge enhancement of the sorted binary image data to produce gray-scale enhanced binary image data; means for selecting the mixed image data as the output of the image processing system if the mixed image data includes gray-scale image data and for selecting the gray-scale enhanced binary image data if the mixed image data is binary image data.

In accordance with a fourth aspect of the invention, there is provided an image processing method comprising the steps of storing mixed image data including binary image data and gray-scale image data, sorting the mixed image data to generate sorted binary image data; performing an edge enhancement operation on the sorted binary image data to produce gray-scale enhanced binary image data; selecting the mixed image data as a system output if the mixed image data includes gray-scale image data; and selecting the gray-scale enhanced binary image data as a system output if the mixed image data is binary image data.

BRIEF DESCRIPTION OF THE DRAWINGS

With the above as background, reference should now be made to the following description of the best mode for carrying out the invention and the accompanying drawings wherein:

FIG. 1 is a functional block diagram of an edge enhancement processing system in accordance with a preferred embodiment of the invention and in accordance with the embodiment of FIG. 51;

FIG. 2 is an example of binary bitmap data applied to the input of the edge enhancement processing system shown in FIG. 1;

FIG. 3 is a gradient magnitude map of the binary bitmap data shown in FIG. 2;

FIG. 4 is a gradient angle map of the binary bitmap data shown in FIG. 2;

FIG. 5 is a functional flow diagram of the operation of the decision matrix employed in the edge enhancement processing system shown in FIG. 1;

FIG. 6 illustrates an 8 x 8 window of binary data for a near vertical line;

FIG. 7 illustrates the gradient directions corresponding to each pixel location of the window shown in FIG. 6;

FIG. 8 illustrates the gradient magnitudes corresponding to each pixel location of the window shown in FIG. 6;

FIG. 9 illustrates a 3 x 5 window of binary data for a near horizontal line;

FIG. 10 illustrates the gradient directions corresponding to each pixel location of the window shown in FIG. 9;

FIG. 11 illustrates the gradient magnitudes corresponding to each pixel location of the window shown in FIG. 9;

FIGS. 12-14 respectively illustrate pixel values, gradient directions and gradient magnitudes for a 5 x 3 window of pixels surrounding a kink site located in the 8 x 8 window of FIG. 6;

FIGS. 15-17 respectively illustrate the pixel values, gradient directions and gradient magnitudes shown in FIGS. 12-14 rotated to a preferred orientation;

FIGS. 18-20 respectively illustrate the pixel values, gradient directions and gradient magnitudes shown in FIGS.- 9-11 rotated to a preferred orientation;

FIG. 21 illustrates a template that is utilized to identify a kink site;

FIGS. 22-24 respectively illustrate the pixel value, gradient direction and gradient magnitude maps for a central pixel having a gradient direction of one;

FIGS. 25-27 respectively illustrate the pixel value, gradient direction and gradient magnitude maps for a central pixel having a gradient direction of two;

FIGS. 28-30 respectively illustrate the pixel value, gradient direction and gradient magnitude maps for a central pixel having a gradient direction of three;

FIGS. 31-33 respectively illustrate the pixel value, gradient direction and gradient magnitude maps for a central pixel having a gradient direction of four;

FIGS. 34-36 respectively illustrate the pixel value, gradient direction and gradient magnitude maps for a central pixel having a gradient direction of five;

FIGS. 37-39 respectively illustrate the pixel value, gradient direction and gradient magnitude maps for a central pixel having a gradient direction of six;

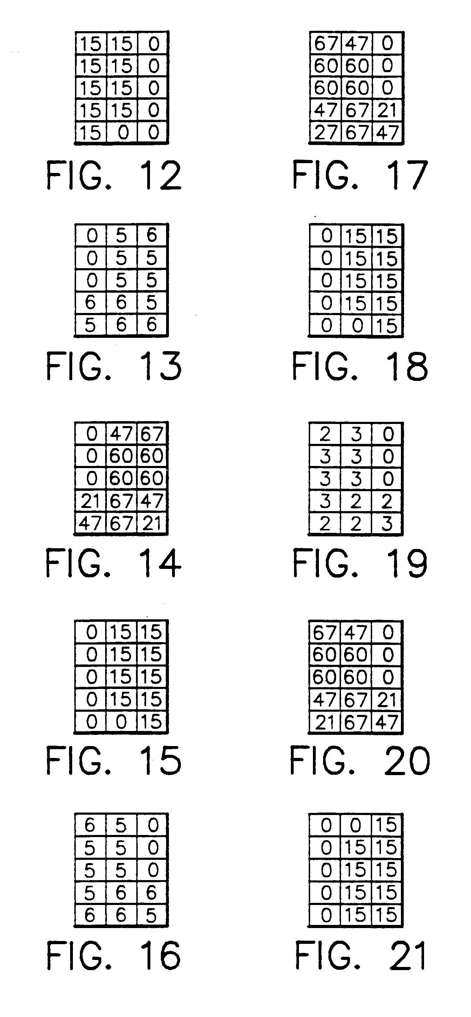

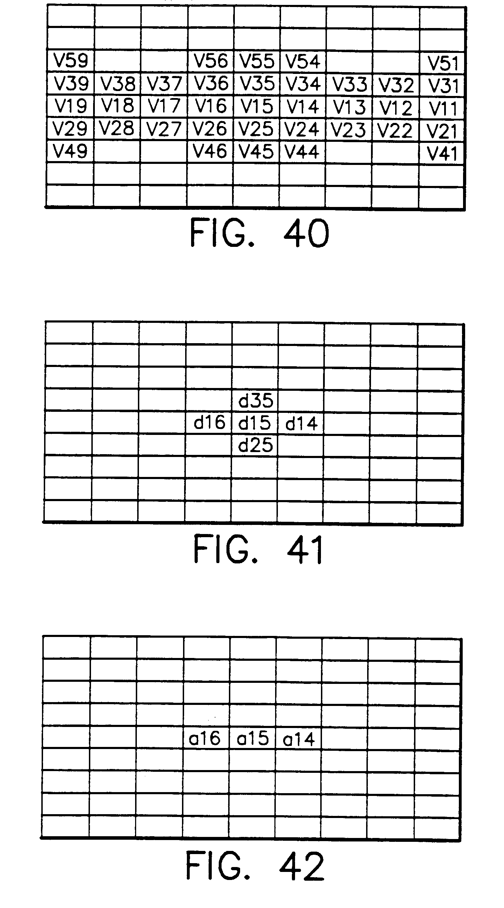

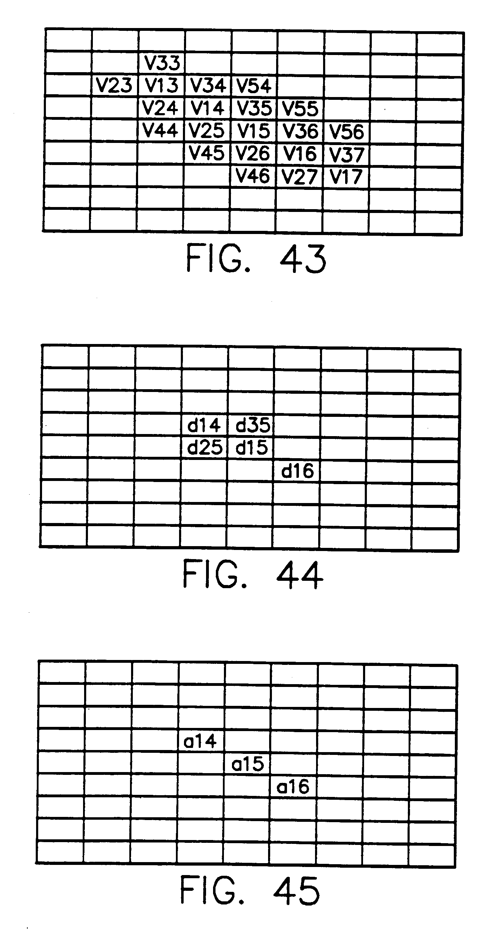

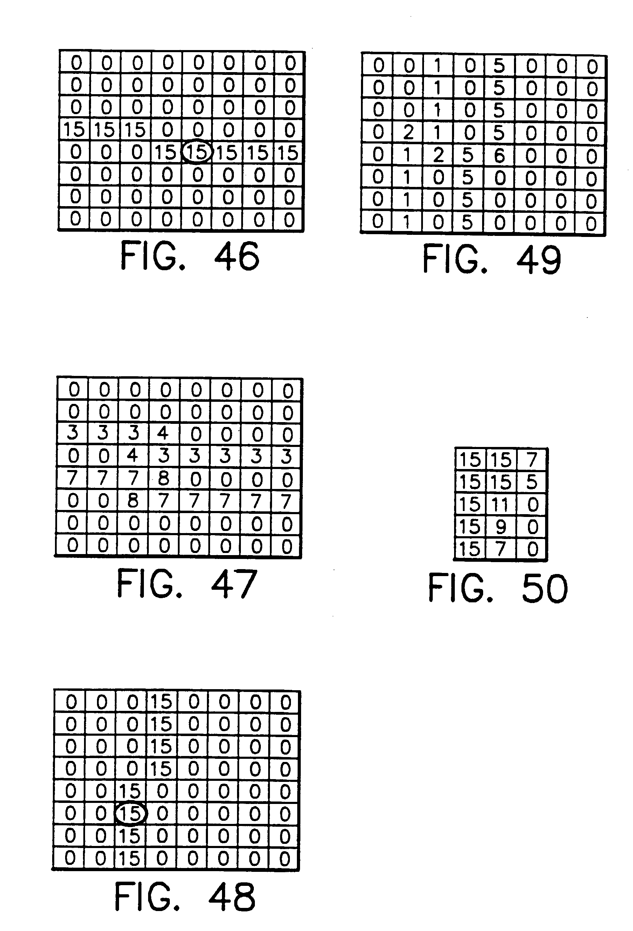

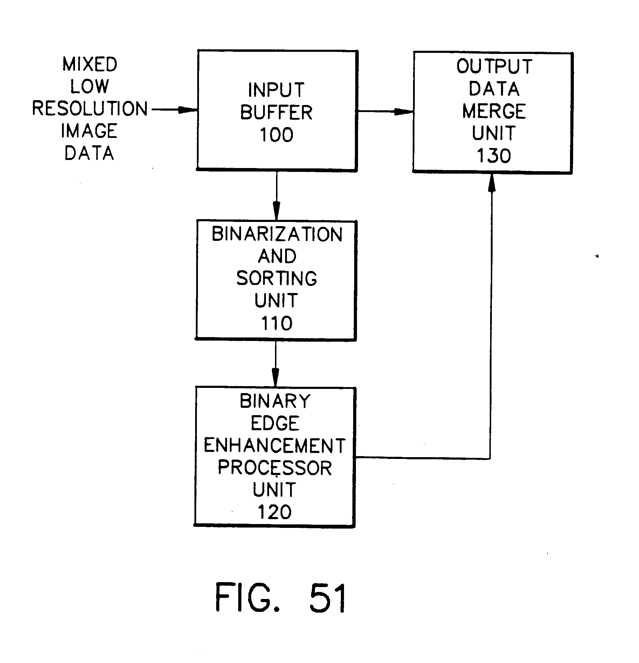

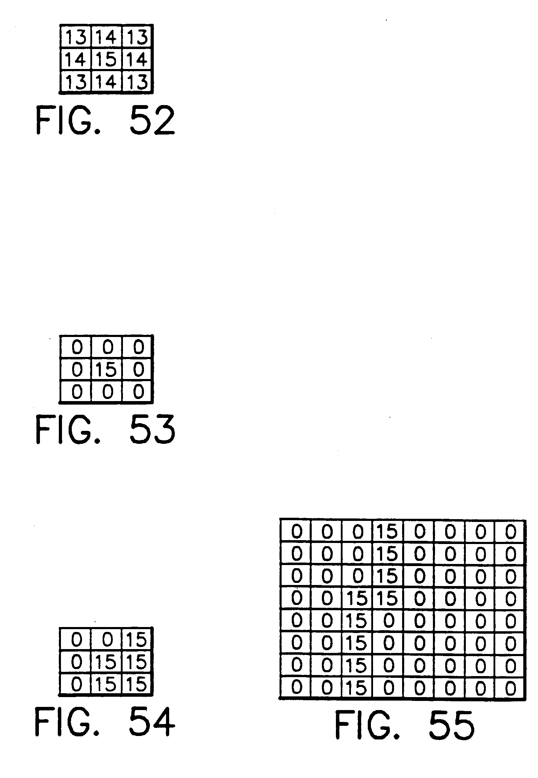

FIGS. 40-42 respectively illustrate the pixel value, gradient direction and gradient magnitude maps for a central pixel having a gradient direction of seven; FIGS. 43-45 respectively illustrate the pixel value, gradient direction and gradient magnitude maps for a central pixel having a gradient direction of eight; FIG. 46 is a window illustrating a one pixel wide horizontal line; FIG. 47 illustrates the gradient directions corresponding to the pixel locations shown in FIG 46; FIG. 48 is a window illustrating a one pixel wide vertical line; FIG. 49 illustrates the gradient directions corresponding to the pixel locations shown in FIG. 48; FIG. 50 is an example of enhanced gray-scale output data corresponding to the original binary image data illustrated in FIG. 12; FIG. 51 is a functional block diagram of an edge enhancement processing system in accordance with the present invention; FIG. 52 is a 3 x 3 window of original image data containing gray-scale data that is supplied to the binarization and sorting unit shown in Fig. 51; FIG. 53 is a 3 x 3 window of sorted image data produced from the binarization and sorting unit shown in Fig. 51 when the mixed image data of Fig. 52 is applied thereto; FIG. 54 is a 3 x 3 window of original image data containing binary data that is supplied to the binarization and sorting unit shown in Fig. 51; and FIG. 55 is an 8 x 8 window illustrating a special case of a single pixel line in which the first pixel of a kink site overlaps an adjacent pixel.

## BEST MODE OF CARRYING OUT THE INVENTION

The preferred embodiment to be described provides a system and method for performing edge enhancement of low resolution binary image files that is flexible and adaptable to high speed processing operations without causing a degradation in image resolution. Operations are performed by the system to obtain outline gradient magnitudes and directions which are used, in combination with the original bitmap data, to reduce the tangential gradient magnitude change (jaggedness) of lines or text within a printed image while preserving the gradient angle (shape of the line or text) without sacrificing the normal gradient magnitude (sharpness of the line or text).

Specifically, the system processes the low resolution bitmap data in sections or windows to determine whether an edge transition or "kink site" occurs within each window. The original bitmap data in the window is then replaced with edge enhanced gray scale data if a kink site is identified. The selection of the correct edge enhanced gray-scale data to be used in place of the original bitmap data is based on whether the central pixel contained within the window is a black or white pixel, whether the central pixel is located on a single pixel line and the location of the central pixel with respect to the kink site. The determination of whether the central pixel is a black or white pixel is based on the binary value assigned to the pixel, the determination of the location of the central pixel with respect to the kink site is based on pixel values and gradient magnitudes of surrounding pixel locations, and the determination of whether the central pixel is located on a single pixel line is based on the gradient magnitude of the central pixel and surrounding pixel locations.

Preferably, the system determines the gradient angles of the pixels contained within the window prior to performing the operations described above. A limited number of gradient directions are then assigned to the pixels based on the gradient angles. The system uses the gradient directions to rotate the window to a selected reference direction in order to simplify the identification of kink sites within the window and the selection of the edge enhanced gray scale data as will be described in greater detail below.

A further embodiment provides a system for performing edge enhancement of mixed low resolution image files that is flexible and adaptable to high speed processing operations without causing a degradation in image resolution. The system employs a binarization and sorting unit to sort data that is indicative of binary data from the mixed low resolution image input file. The sorted binary data is then supplied to a binary data edge enhancement processor for edge enhancement processing. The output from the binary data edge enhancement processor unit is supplied to a data merger unit along with the original image data. The data merger unit determines whether the original image data included gray-scale image data. If the data merger determines the original data does include gray-scale image data, the original data is supplied as the output of the processing system. If the data merger determines that the original data is binary image data, the output from the binary edge enhancement processor unit is supplied as the output of the processing system.

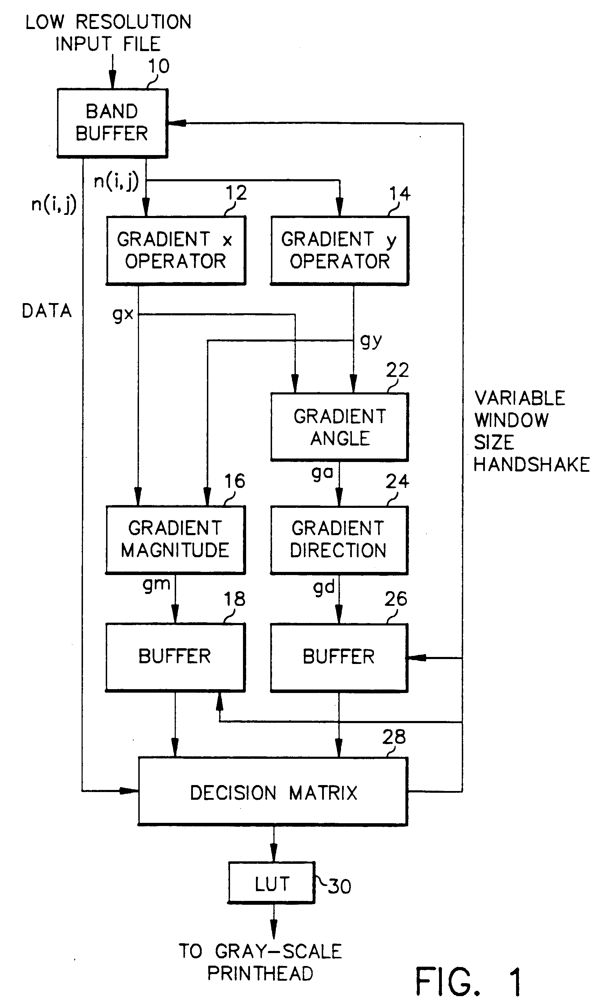

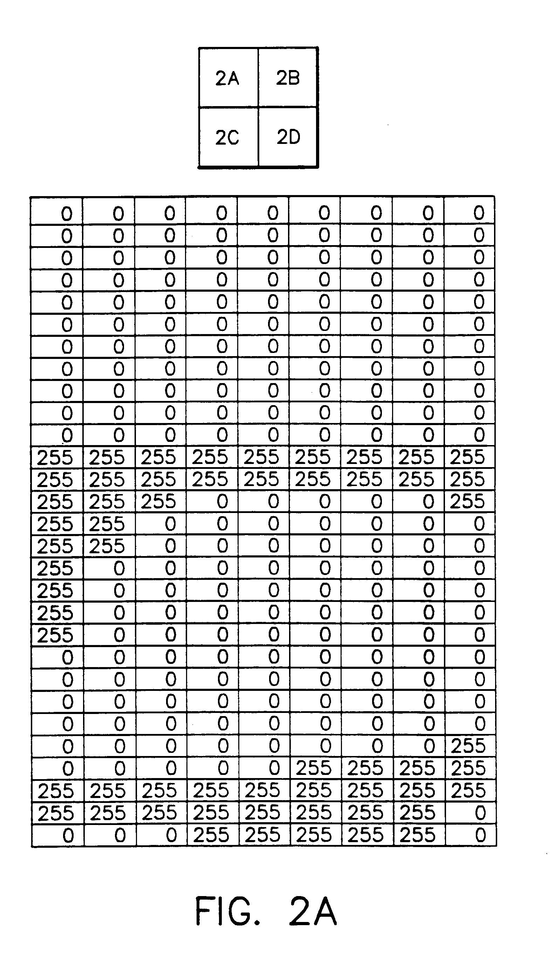

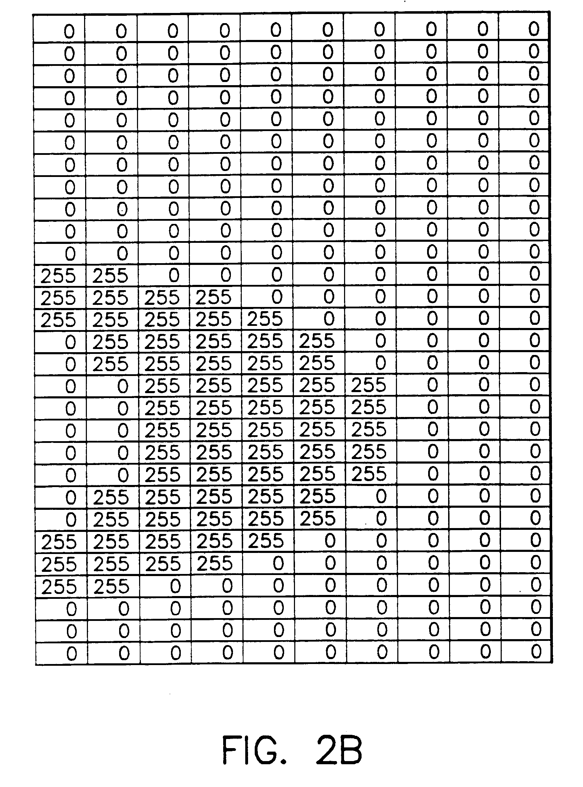

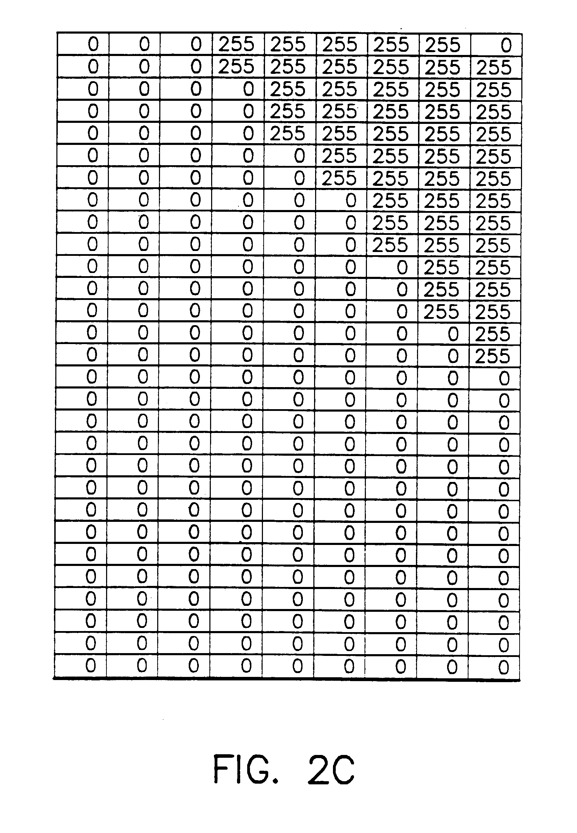

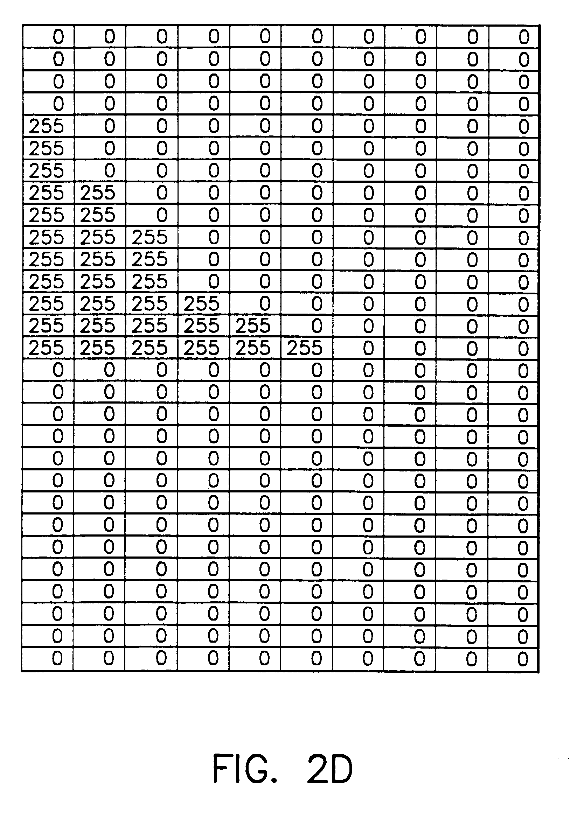

A functional block diagram of an edge enhancement processing system in accordance with the invention is illustrated in Fig. 1. A low resolution binary bitmap (300 dpi or 11.86 dots per mm) generated for example by using a commercially available software package such as PostScript, is stored in a band buffer 10, where $n(i,j)$ is a pixel value within the bitmap at location $(i,j)$. The term "binary" bitmap or image will be understood by those skilled in the art to refer to a bit map or image in which image pixels are either fully exposed or are unexposed, i.e. no gray-scale pixel data is present. The term "gray-scale" refers to image data wherein each pixel is represented by more than one bit of data to indicate one or more shades of gray between fully exposed and unexposed. Of course, the color of the pixel will be dependent upon the color toner or pigment used to develop same. An example of such a binary bitmap for a portion of the letter "R" is illustrated in FIG. 2 in which exposed areas of an image (in the illustrated embodiment) are identified in this example by the numeral 255 (i.e. pixel exposed) and non-exposed areas are identified by zero (i.e. pixel not exposed).

Sobel gradient masks 12, 14 for both the horizontal (sobelx) and vertical (sobely) directions operate on the binary bitmap data n(i,j) to produce a gradient x operator (gx) and a gradient y operator (gy). Typical sobel gradient masks that can be employed include:

sobelx = (-1 0 1, -2 0 2, -1 0 1)
where gx (i, j) = sobelx*n(i,j); and
sobely = (-1 -2 -1, 0 0 0, 1 2 1)
where gy (i,j) = sobely*n(i,j)

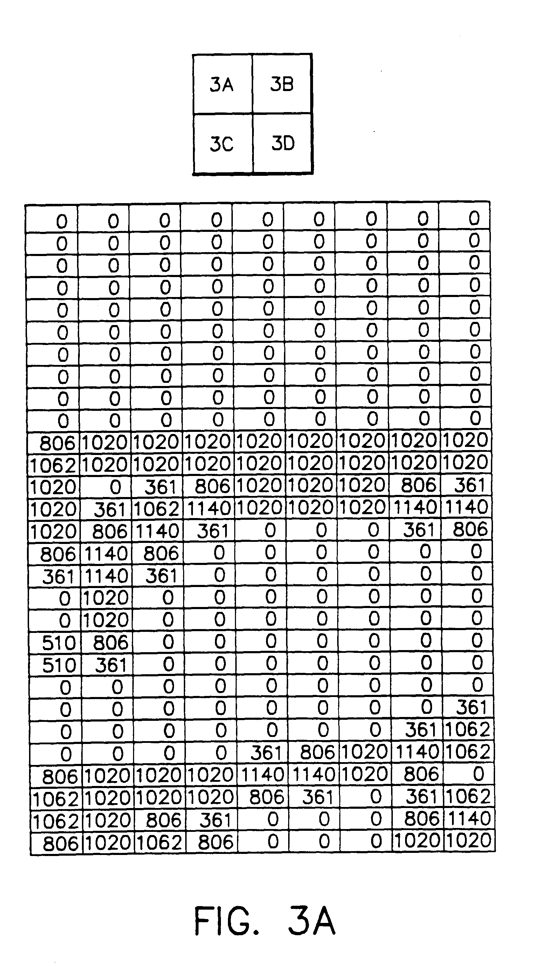

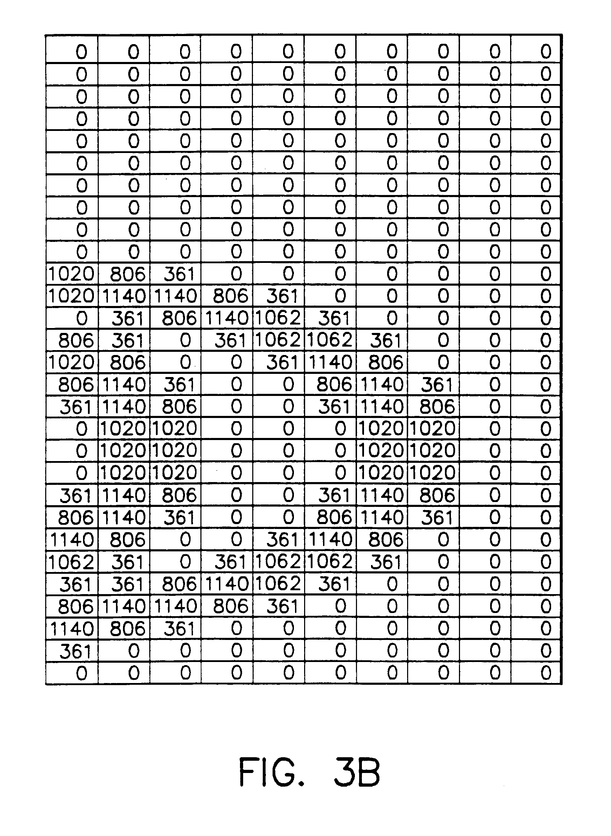

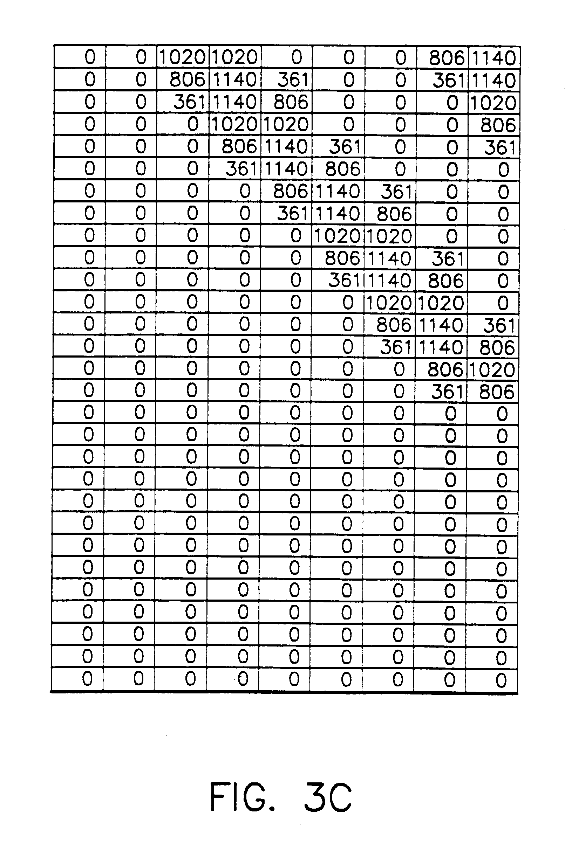

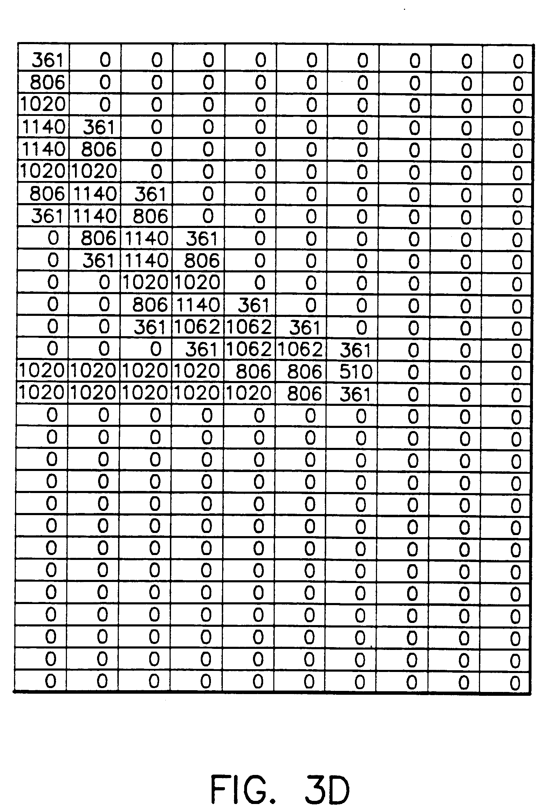

The gradient magnitude (gm) 16 is then calculated by taking the square root of the sum of the square of the gradient x operator (gx) and the square of the gradient y operator (gy) for each location in the bitmap to produce a gradient magnitude map, as shown in Fig. 3. The gradient magnitude map is then stored in the a buffer 18 for later use. I

$$gm\ (i,j) = sqrt\ (gx(i,j)2 + gy(i,j)2)$$

Similarly, the gradient angle (ga) 20 is determined for each location using the equation:

$$ga(i,j) = tan\text{-}1(gy(i,j)/gx(i,j))$$

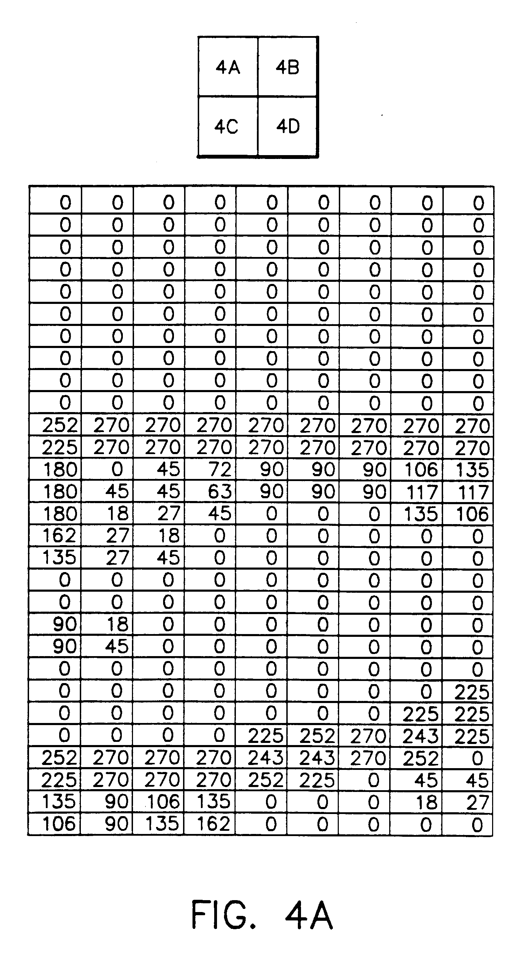

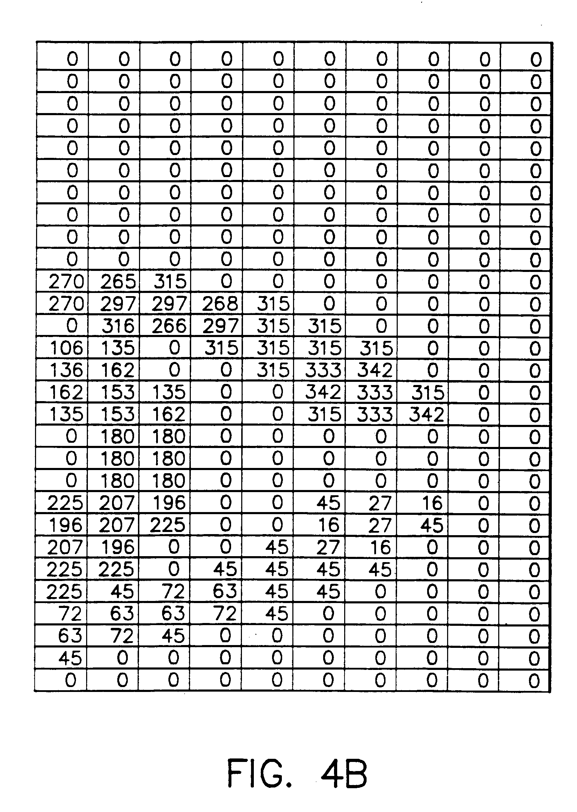

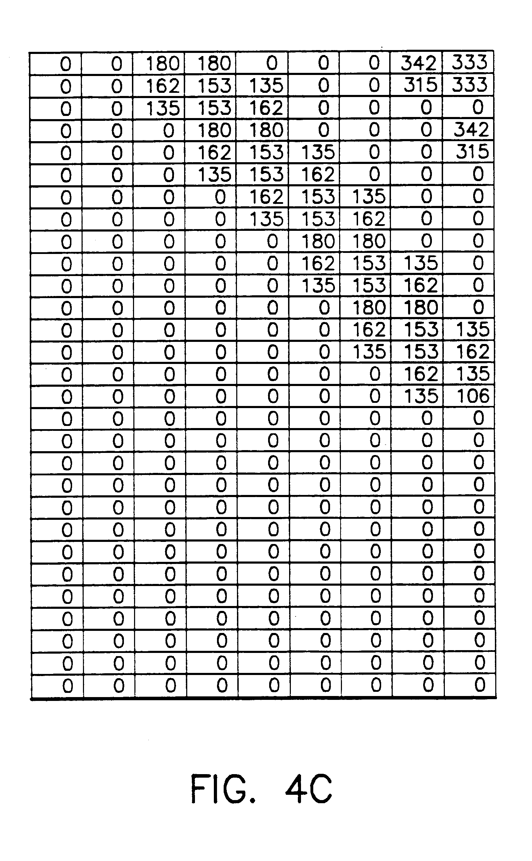

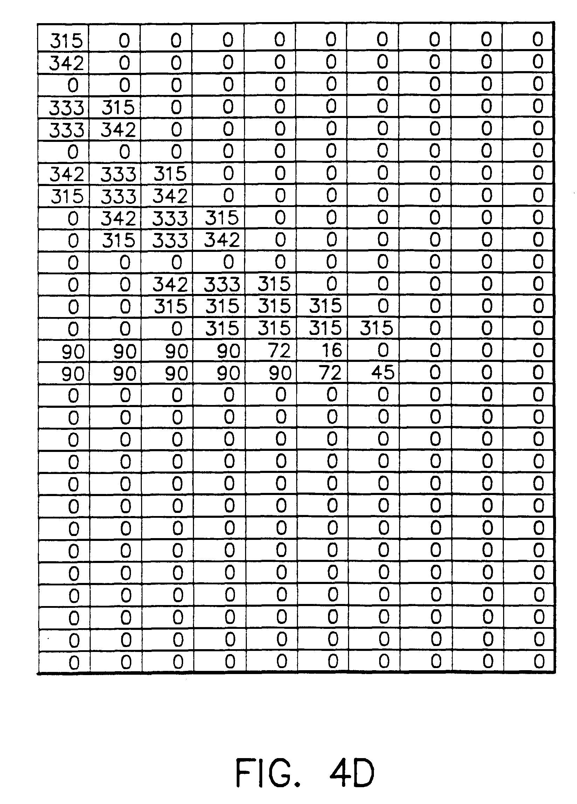

to produce a gradient angle map as shown in Fig. 4. It should be noted that an arctangent calculation can also be employed to calculate ga if desired.

For purposes of convenience, the gradient angle ga is preferably limited to a choice of gradient directions gd by a gradient direction sorter 24. For example, eight directions are preferably employed using the following sort criteria:

gd = 2, if (68° >= ga > 23°)
gd = 3, if (113° >= ga > 68°)
gd = 4, if (158° >= ga > 113°)
gd = 5, if (203° >= ga > 158°)
gd = 6, if (248° >= ga > 203°)
gd = 7, if (293° >= ga > 248°)
gd = 8, if (338° >= ga > 293°)

gd = 1, if ga is between 338 and 23 degrees and gm isn't zero

gd = 0, if gm = 0

The gradient direction for each location is also stored in a buffer 26. It should be noted that the use of a finer separation criteria (i.e. more than eight directions) for gd can be employed if desired.

The original bitmap data and the gradient magnitudes gm and gradient directions gd corresponding thereto are supplied to a decision matrix 28, which uses this information to select edge enhanced gray-scale output data to replace the original binary bitmap data. In a preferred mode of operation, the decision matrix 28 determines whether the central pixel of a window of the original bitmap data is black or white pixel, whether the central pixel is contained in a single pixel line and the position of the pixel with respect to a kink site, by comparing the pixel data to a set of criteria represented by predetermined pixel values and gradient magnitudes. In accordance with rules establishing a set of criteria, the decision matrix generates an address that is supplied to a LUT 30. The LUT 30 generates edge enhanced gray-scale output data based on the address generated by the decision matrix 28. The enhanced gray scale output data replaces the original binary input data and produces a smoother image without jagged edges when applied to a gray scale printhead (for example a laser, LED thermal, inkjet or other type of printhead) of a printer or to a gray level display such as a CRT or other suitable display.

It should be noted that the illustrated system can be implemented as a computer program executed on a general purpose computer in hardware as a pipelined processing system, preferably in the form of an application specific integrated circuit (ASIC), or a combination thereof. Processing speeds can be improved by precalculating the gradient magnitudes -and directions for all possible combinations of binary data within the window and storing the precalculated values within gradient magnitude and gradient direction LUTs. In operation, a window of binary data is supplied as an address to the gradient magnitude and gradient direction LUTs which then generate corresponding gradient magnitude and directions maps. The operation of the decision matrix can similarly be implemented with LUTs by supplying the original binary input data and corresponding gradient magnitude and direction information as an address thereto.

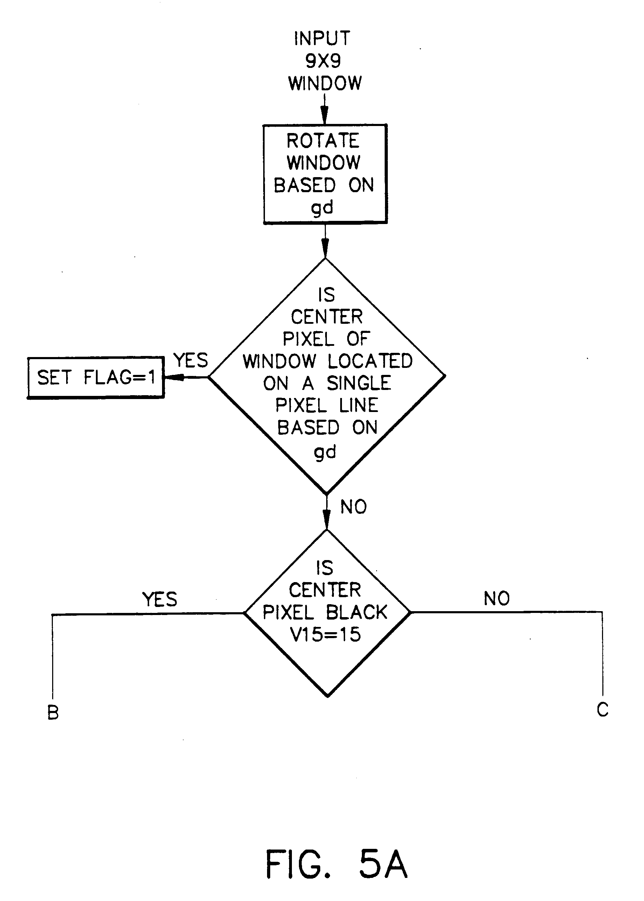

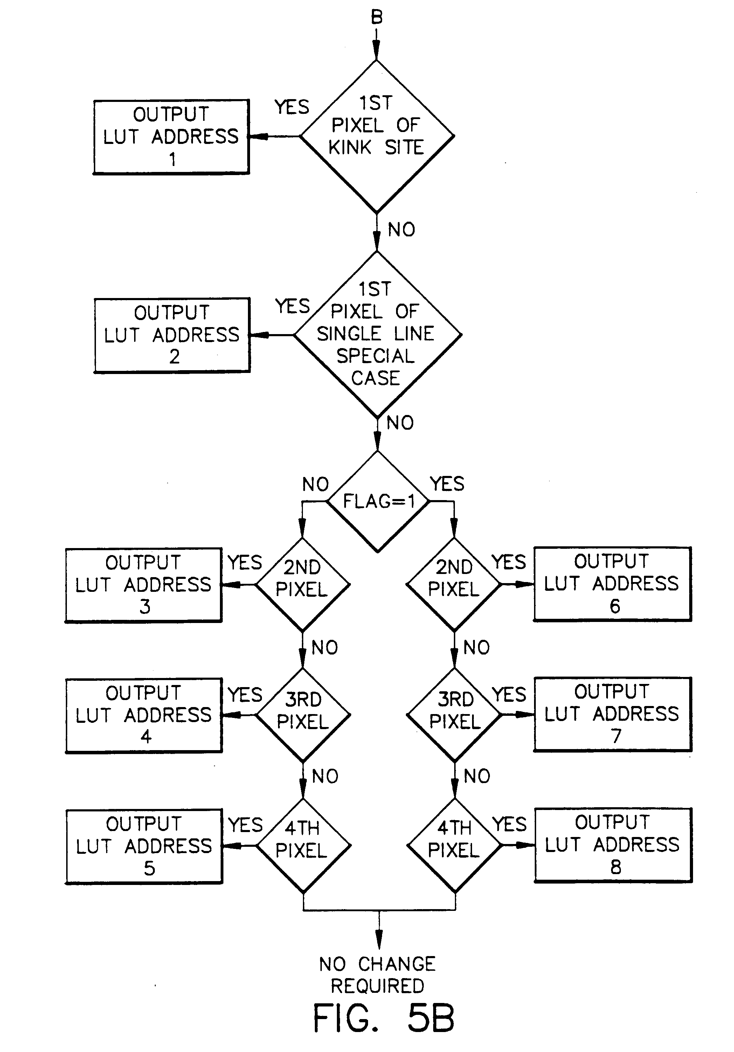

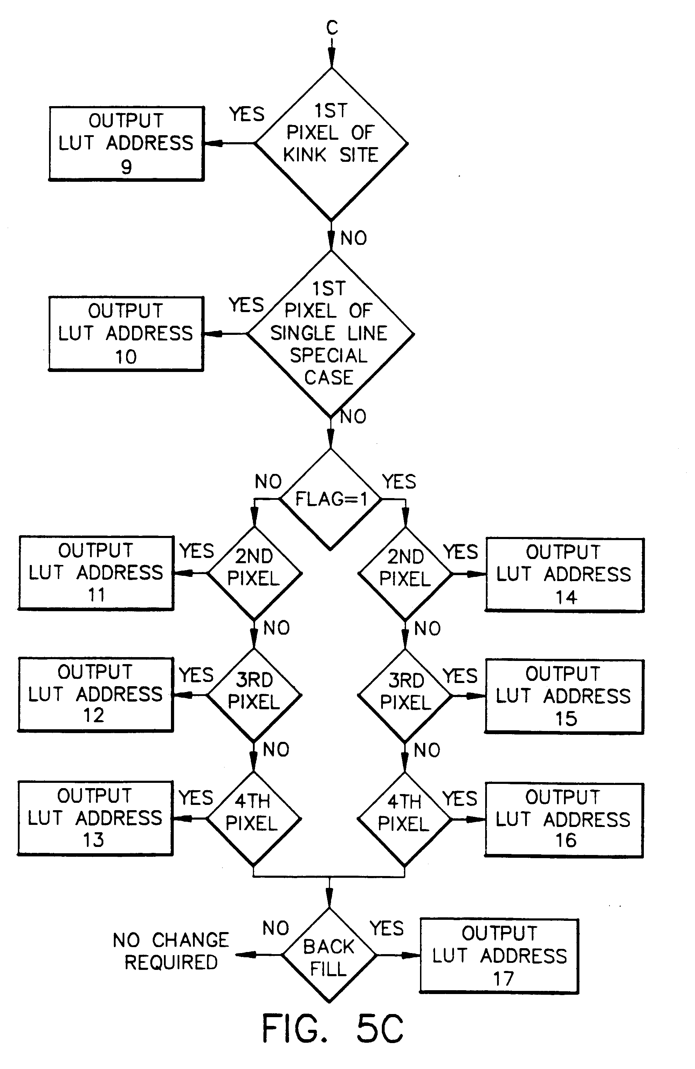

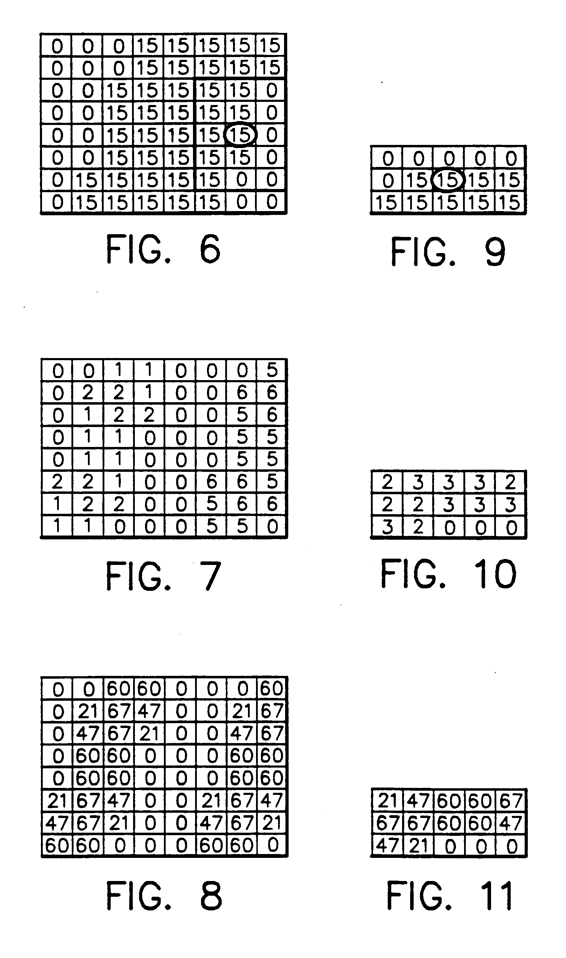

A general flow diagram of the operation of a decision matrix as implemented in software is illustrated by the decision tree in Fig. 5. Fig. 6 illustrates an 8 x 8 window of data retrieved from the original binary bitmap data previously stored in the band buffer. While an 8 x8 window is shown, it is preferred to have larger windows such as 9 x 9 or greater. The pixel values illustrated in Fig. 6 are for a section of a near vertical line that is greater than one pixel in width. Figs. 7 and 8, respectively, illustrate the gradient directions and magnitudes corresponding to each of the pixel values illustrated in Fig. 6. In this example, exposed pixels are denoted by the numeral fifteen and non-exposed pixels are denoted by zero.

The decision matrix first orients the pixel data via a rotation operation in order to decrease the number of template comparisons with the rules or sets of criteria that will be required to identify kink sites requiring edge correction. For example, a near vertical edge (see the circled second black pixel of a kink site shown in Fig. 6) can either be approached from the left (gd =1 ) or the right (gd = 5) while a near horizontal line can be approached either from the top (gd = 3) or the bottom (gd = 7). An example of a near horizontal line segment is shown in Figs. 9-11. In the case of the vertical line approached from the right, a 5 x 3 window of pixels surrounding the second black pixel of the kink site of the near vertical line as shown in Figs. 12-14 can be rotated to a position illustrated in Figs. 15-17 based on the direction of the second black pixel. Similarly, a 3 x 5 window of pixels surrounding the second black pixel (circled) of the kink site of the near horizontal line as shown in Figs. 9-11 can also be rotated to a position illustrated in Figs. 18-20. As the pixel values are identical for the rotated segments as shown in Figs. 15 and 18, a single template or substitute bit map pattern can be used to identify kink sites in both near vertical lines approached from the right and the near horizontal lines approached from the top and the same enhanced gray-scale data can therefore be employed to smooth the kink site in both cases. In fact, all of the near vertical and near horizontal lines (for all four possible directions of approach) can be sorted through the rotation operation into a template matching the pixel configuration of Figs. 15 and 18 or a template matching the configuration shown in Fig. 21, rather than the eight bit maps that would be required to be analyzed (two for each direction) if rotation were not employed. A similar procedure is utilized for near diagonal line segments (i.e. gd = 2, 4, 6 or 8).

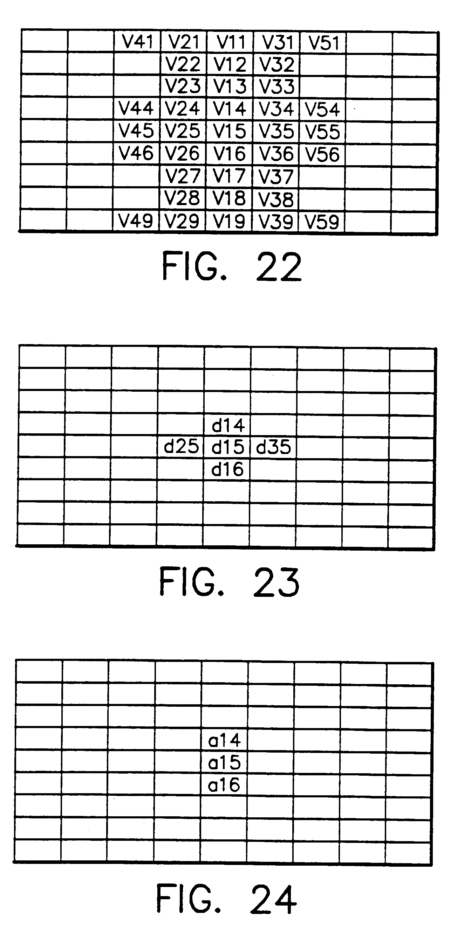

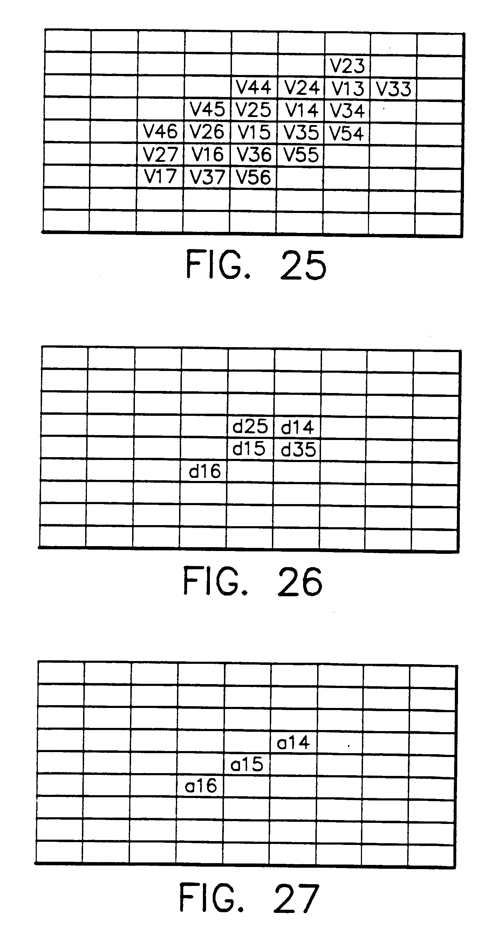

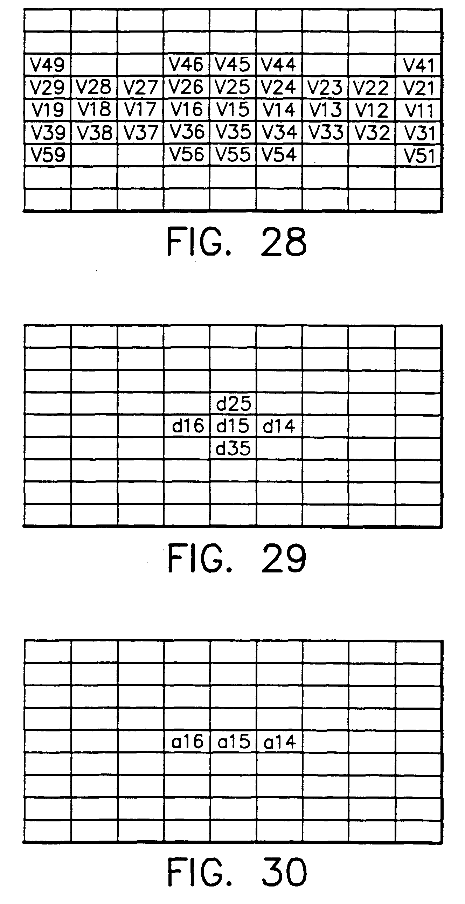

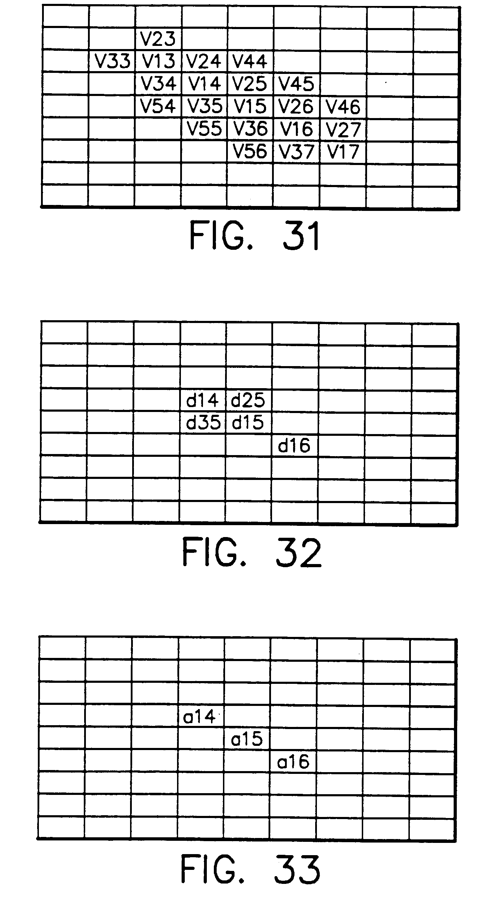

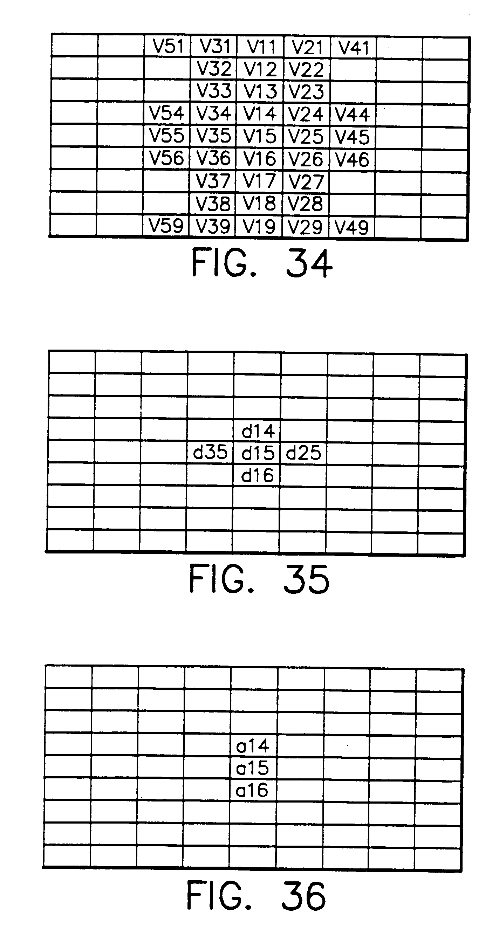

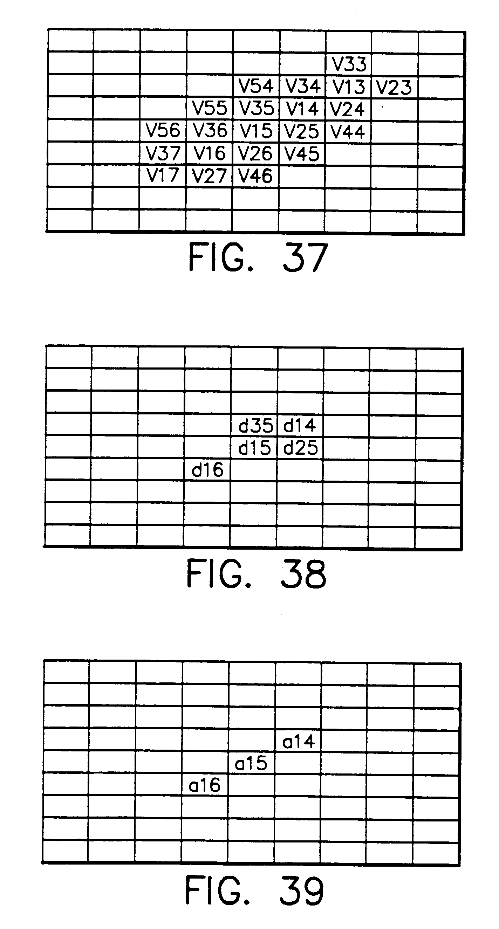

The rotation of the pixels within the windows is accomplished by a simple remapping routine. Figs. 22-45 illustrate how the pixel values, gradient magnitudes and gradient direction correspond for each direction. For purposes of illustration, the pixel values for each pixel within the 9 x 9 window are denoted as V(x y), where V is the pixel value, x is a row position within the 9 x 9 window and y is a pixel position within the row. For example, as shown in Fig. 22, the pixel value of the central pixel within the 9 x 9 window is denoted by V15. Similarly, the gradient direction and magnitude for each pixel within the window is respectively denoted by d(x y) and a(x y).

In addition to rotating the pixel window to a predetermined direction, the pixel value of the central pixel within the window is analyzed to determine whether the pixel is a black pixel or a white pixel, whether the central pixel is located within a single pixel line and the location of the central pixel with respect to the kink site, as each of these factors can influence the type of enhanced data utilized to smooth the kink site. The determination of whether the pixel is black or white is made by a simple comparison of the pixel value to the value assigned to an exposed pixel. For example, in the embodiment just discussed, the central pixel is a black pixel if the pixel value is fifteen (V15 = 15) and the central pixel is a white pixel if the pixel value is zero (V15 = 0). The determination of whether the central pixel is located within a single pixel line is made by comparing the gradient direction of the central pixel to the gradient directions of surrounding pixels. For example, for the lower of the two horizontal single lines illustrated in Fig. 46, the second black pixel (circled) from the kink site has a direction of zero, while the pixel location above the second black pixel has a direction of three and the pixel location below the second black pixel has a direction of seven (see Fig. 47). Similarly, the second black pixel (circled) from a kink site of a vertical single pixel line (left most of the two lines) shown in Fig. 48 has a direction of zero, while the pixel location to the left has a direction of one and the pixel location to the right has a direction of five (see Fig. 49). The determination of the location of the pixel with respect to the kink site is based on the gradient magnitude of the pixel location and adjacent pixel locations. For example, the gradient magnitude will always be the highest value for the first pixel location of a kink site at a non-single pixel line. Thus, the pixel values and gradient amplitudes can be compared with a template to determine whether the central pixel is the first, second, third or fourth pixel from the kink site. If desired, a backfill template can also be employed if a white pixel is not identified as the first through fourth pixel from a kink site. That is, one or more gray-scale pixels will be added to a location(s) that features a white pixel where the gradient magnitude of the pixels in the gradient direction of the current pixel is changing.

As shown in Fig. 5, it is preferable to make the decision of whether the pixel is a white or black pixel and then proceed immediately with a determination of whether the pixel is the first pixel of a kink site, before making a determination of whether the pixel is the first pixel of a single line. If the pixel does not fall into one of these two latter categories, a general decision is made as to whether the pixel is in a single line. The determination of whether the pixel is the first pixel of a single line is made using a different criteria than the criteria used for the general decision in the subsequent step in order to cover a special case where the first pixel of the kink site in a single line overlaps an adjacent pixel as shown in Fig. 55. If a criteria were used in which a change in direction were required from both sides of the pixel in order to identify a single pixel line, the case of the overlapped first pixel would not be caught.

The following are examples of comparisons that are preferably applied to the pixel values and gradient magnitudes to determine whether the central pixel is:

a) the first black pixel of a kink site (not a single pixel line) if: a15 > a14, & a15 > a16, & V35 $\neq$ 0 & V25 = 0, & V26 = 0, & V45 = 0, & V36 $\neq$ 0, & V55 $\neq$ 0, & ((V24 $\neq$ 0, V16 = 0, & V14 $\neq$ 0) or (V27 $\neq$ 0, & V14 = 0, & V16 $\neq$ 0));

b) the first black pixel of a kink site in a single pixel line if: (V15 $\neq$ 0, & (V14 $\neq$ 0, & V13 $\neq$ 0, & V16 = 0,

& V17 = 0, & ((V26 ‡ 0, & V27 ‡ 0, & V24 = 0, & V23 = 0) or (V36 ‡ 0 & V37 ‡ 0 & V34 = 0, & V33 = 0))) or (V16 ‡ 0, & V17 ‡ 0, V13 = 0, V14 = 0, & ((V23 ‡ 0 & V24 ‡ 0, & V26 = 0, & V27 = 0) or (V33 ‡ 0, & V34 ‡ 0, & V36 = 0, & V37 = 0)))); and

c) the first white pixel of a kink site in a single pixel line if: (V15 = 0, & V35 ‡ 0, & ((V13 = 0, & V14 = 0, & V16 ‡ 0, & V17 ‡ 0, & V34 ‡ 0) or (V13 ‡ 0, & V14 ‡ 0, & V16 = 0, & V17 = 0, & V36 ‡ 0)) & ((a15 > a14, & a15 <= a16) or (a15 <= a14, & a15 > a16))).

Similar criteria are used for each of the other decisions illustrated in Fig. 5. Once a match is established, an address is generated and supplied to the LUT in order to generate corresponding enhanced gray-scale data which is subsequently supplied to the gray-scale printhead of a printer or to a display. See, for example, the enhanced gray-scale data shown in Fig. 50 which corresponds to the original data shown in Fig. 12. The actual values of the enhanced gray-scale data to be utilized in place of the binary input data depends on the characteristics of the printer or display to which the enhanced data is to be supplied and a subjective determination of what is considered acceptable to the end viewers of the printed images. The original binary bitmap data is used if no match occurs.

Some basic rules, however, do apply in generating the enhanced data to be stored in the LUT. For example, looking at some kink sites in the downstroke of the letter R in the gradient magnitude map of Fig. 3 and the gradient angle map of Fig. 4, it is noted that the gradient magnitude is at a peak value right at the kink site with respect to the gradient magnitude of the pixels along the gradient direction (the gradient direction being along the tangential direction of the line). Thus, for an exposed pixel, it is desirable to reduce the exposure at that kink site to reduce jaggedness. In contrast, it is desirable to increase the exposure of the white pixel at the kink site, which also has the gradient magnitude at its peak, to reduce line jaggedness, provided that one of the pixel values along the gradient direction is not zero which signifies that the white kink site is indeed a kink site. Similar sets of rules can be written to take care of black or white pixels at a certain distance to the kink site to have a gradual line width change to reduce tangential gradient magnitude changes. It should be noted that the exposure value of the exposed and non-exposed pixels is not changed on the upper portion of the letter R, since no kink site is defined (gradient change along the gradient direction of the search turns out a similar gradient magnitude). Therefore, the normal gradient magnitude or sharpness of the letter is not reduced. Other rules can be written to take care of single pixels.

The system preferably makes use of a variable window depending on the gradient angle (or direction) change of the pixels along the gradient angle. For example, the problem of line jaggedness usually occurs at near horizontal or near vertical lines. For the case of a near horizontal line, a larger window (preferably rectangular with a long axis in the direction of the line segment) along the direction of the gradient direction can be utilized. If the gradient direction of the pixels is not changing much, a longer window is used. For 400 dpi (15.81 dots per mm), a window of about 20 pixels length in one direction is about right or 10 pixels from the original position on both sides. Then if a kink site is hit, usually signifying a large change in gradient magnitude and direction --like from an angle of 180 to 153 degree change in a near vertical case --, the current pixel location with respect to the kink site will give the LUT necessary information for the modification.

A functional block diagram of an edge enhancement processing system for processing mixed data in accordance with another embodiment of the invention is illustrated in Fig. 51. A mixed low resolution image file, in the form of a bitmap having a plurality of pixel locations containing either gray-scale image data or binary image data, is supplied to input buffer 100. The bitmap is subsequently supplied to a binarization and sorting unit 110, which passes only sorted data that is indicative of binary image data to a binary edge enhancement processor unit 120. The binary edge enhancement processor unit 120 performs edge enhancement processing operations on the sorted data to produce edge enhanced sorted data that is supplied to an output data merge unit 130. The output merge unit 130 analyzes the original bitmap data supplied to the binarization and sorting unit 110 to determine whether the original bitmap data was gray-scale image data or binary image data. If the original data was gray-scale image image data, the output data merger unit 130 supplies the original data from the input buffer 100 as the output of the system. If the original data, however, was binary image data, the output data merger unit 130 supplies the edge enhanced sorted data received from the binary edge enhancement processor unit 120 as the output of the system.

An example of the operation of the system will be discussed with references to Figs. 52-54. Fig. 52 illustrates a 3 x 3 window of gray-scale image data supplied to the binarization and sorting unit 110. The binarization and sorting unit 110 passes only those pixel values that are indicative of binary image information, namely, a value of fifteen for an exposed pixel or a value of zero for a non-exposed pixel for the illustrated example (assuming a four bit 0-15 gray-scale), to the binary edge enhancement processor unit 120. Those pixel locations containing a gray-scale data are filled with zeros as illustrated in Fig. 53. The binary edge enhancement processor unit 120 then performs an edge enhancement processing operation on the data shown in Fig. 53. The output data merge unit 130 analyzes the original data illustrated in Fig. 52 to determine whether gray-scale information is present. A simple comparison operation, for example, can be used to compare each pixel value within the window to either zero or fifteen. If the pixel value does not fall within this criteria, as is the case for the data illustrated in Fig. 52, the output data merge unit 130 passes the original data to the output of the system, thereby avoiding any possible distortion of the gray-scale data. In the case where the original bitmap data is binary image data, for example as shown in Fig. 54, the sorted data supplied by the binarization and sorting unit 110 to the binary edge enhancement processor unit 120 will be identical to the original data. The output data merge unit 130 will then select the edge enhanced data produced by the binary edge enhancement processor unit 120 as the output of the system.

It will be understood that the binary edge enhancement processor unit 120 can be implemented with any of the previously discussed conventional binary image edge enhancement systems. A preferred edge enhancement processor to be used in the binary edge enhancement processor unit 120, however, is that shown and described above in detail.

An advantage of the edge enhancement system is that it is not necessary to provide a set of criteria for comparison with every possible bit map pattern. Rather, the bit map patterns can be rotated to form a template that can be compared to a set of criteria for analyzing the template. There is thereby provided a reduction in the set of criteria and no need to store a multitude of templates for which an exact match is required as is done in conventional template matching methods. In addition, the edge enhancement system reduces line jaggedness with little sharpness degradation, in contrast to conventional outline extraction methods in which the outline of the text is traced by linking the maximum gradient magnitude points together. The outline extraction method runs into problems when the fonts in the image to be printed become smaller or when there are multiple single pixel line segments that are closely spaced. A further advantage is that gray level data is left untouched and just binary data is enhanced.

The invention has been described with reference to certain preferred embodiments thereof. It will be understood, however, that modifications and variations can be made within the scope of the appended claims.

Industrial Utility

The invention can be utilized to process any low resolution binary image file for printing on any type of gray-scale printer including those employing lasers, LEDs, thermal, ink-jet or other printing elements or for use on a gray-scale display such as a CRT.

**Claims**

1. An image processing system comprising means (10) for storing a binary bitmap image file including a plurality of pixel locations representing an edge of an image to be enhanced; gradient determining means (12, 14, 16, 22, 24) for determining a gradient value corresponding to each pixel location of the binary bitmap image file; characterized by the gradient determining means determining a respective value for gradient magnitude and a different respective value for gradient direction corresponding to each pixel location of the binary bitmap image file; decision matrix means (28) for comparing a window of the binary bitmap image file; the window including a pixel location under consideration for grayscale rendering and plural pixel locations adjacent thereto, and gradient values corresponding to plural pixel locations within said window to predetermined sets of criteria; and means, responsive to said decision matrix means, for performing edge enhancement of the binary image data to generate enhanced grayscale image data for the pixel location under consideration.

2. A system as claimed in Claim 1, wherein said decision matrix means generates a lookup table address in response to said comparing and said means for generating enhanced grayscale image data is a lookup table (30).

3. A system as claimed in Claims 1 or 2, wherein the decision matrix means (28) includes means for rotating a window to predetermined reference direction in response to the gradient direction information corresponding to the pixel location under consideration.

4. A system as claimed in Claims 1, 2 or 3, wherein the decision matrix means determines whether the pixel location under consideration is located in a single pixel width line, and the location of the pixel location under consideration with respect to a kink site.

5. A system as claimed in any of Claims 1 through 4, and including means for storing mixed image data including binary image data and grayscale image data; means for sorting the mixed image data to generate sorted binary image data; and means for selecting the mixed image data as output of the image processing system if the mixed image data includes grayscale image data and for selecting the grayscale enhanced image data if the mixed image data is binary image data.

6. A system of any of Claims 1 through 5 in combination with a grayscale printer.

7. A system of any of Claims 1 through 5 in combination with a grayscale display.

8. A method of providing edge enhancement of binary image data comprising the steps of storing a binary bitmap image file including a plurality of pixel locations; determining a gradient value corresponding to each pixel location of the binary bitmap image file; characterized by in the step of determining a respective value for gradient magnitude is determined and a different respective value for gradient direction is determined corresponding to each pixel location of the binary bitmap image file; comparing a window of the binary bitmap image file and gradient values corresponding to plural pixel locations within said window to predetermined sets of criteria; and in response to the comparing, performing edge enhancement of the binary image data to generate enhanced grayscale image data for the pixel location under consideration.

9. A method of Claim 8 and including generating a lookup table address in response to said comparing and generating enhanced grayscale image data from said lookup table.

10. A method as claimed in Claims 8 or 9 and including the step of rotating a window to a predetermined reference direction in response to gradient direction information corresponding to the pixel location under consideration.

11. A method as claimed in Claims 8, 9 or 10 and wherein a determination is made of whether the pixel location under consideration is a black or white pixel, whether the pixel location under consideration is located in a single pixel width line, and the location of the pixel location under consideration with respect to a kink site.

12. A method as claimed in any of Claims 8 through 11 and including the step of storing mixed image data including binary image data and grayscale image data; sorting the mixed image data to generate sorted binary image data; and selecting the mixed image data as an output if the mixed image data includes grayscale image data; and selecting the grayscale enhanced image data as a system output if the mixed image data is binary image data.

13. A method as claimed in any of Claims 8 through 12 and including the step of printing the enhanced data with a grayscale printer.

14. A method as claimed in any of Claims 8 through 12 and including the step of displaying the enhanced data on a grayscale display.

**Patentansprüche**

1. Bildverarbeitungssystem mit einem Mittel (10) zum Speichern einer Binär-Bitmap-Bilddatei, die eine Vielzahl von Pixelstellen aufweist, welche eine Kante eines zu verbessernden Bildes kennzeichnen; mit Gradientenbestimmungsmitteln (12, 14, 16, 22, 24) zum Bestimmen eines Gradientenwerts, der jeder Pixelstelle der Binär-Bitmap-Bilddatei entspricht;
gekennzeichnet durch die Gradientenbestimmungsmittel, die jeweils einen Wert für die Gradientengröße und einen anderen für die Gradientenrichtung bestimmen, welche jeder Pixelstelle der Binär-Bitmap-Bilddatei entsprechen; durch eine Entscheidungsmatrix (28) zum Vergleichen eines Fensters der Binär-Bitmap-Bilddatei, wobei das Fenster eine für die Graustufenwiedergabe zu berücksichtigende Pixelstelle und mehrere Pixelstellen im Anschluß daran sowie Gradientenwerte aufweist, die mehreren Pixelstellen innerhalb des Fensters und vorbestimmten Gruppen von Kriterien entsprechen; und durch ein Mittel, welches auf die Entscheidungsmatrix anspricht, zur Durchführung von Kantenverbesserungen der Binärbilddaten, um verbesserte Graustufenbilddaten für die zu berücksichtigende Pixelstelle zu erzeugen.

2. System nach Anspruch 1, dadurch gekennzeichnet, daß die Entscheidungsmatrix eine Wertetabellen-Adresse in Abhängigkeit von dem Vergleichsvorgang erzeugt, und daß das Mittel zum Erzeugen verbesserter Graustufen-Bilddaten eine Wertetabelle (30) ist.

3. System nach Anspruch 1 oder 2, dadurch gekennzeichnet, daß die Entscheidungsmatrix (28) ein Mittel zum Drehen eines Fensters in eine vorbestimmte Bezugsrichtung in Abhängigkeit von der Gradientenrichtungsinformation, die der zu berücksichtigenden Pixelstelle entspricht, aufweist.

4. System nach Anspruch 1, 2 oder 3, dadurch gekennzeichnet, daß die Entscheidungsmatrix feststellt, ob die zu berücksichtigende Pixelstelle in einer ein Pixel breiten Zeile liegt, und daß sie die Lage der zu berücksichtigenden Pixelstelle in bezug auf eine Knickstelle bestimmt.

5. System nach einem der Ansprüche 1 - 4, gekennzeichnet durch ein Mittel zum Speichern gemischter Bilddaten, bestehend aus Binärbilddaten und Graustufen-Bilddaten; durch ein Mittel zum Sortieren der gemischten Bilddaten, um sortierte Binärbilddaten zu erzeugen; und durch ein Mittel zum Auswählen der gemischten Bilddaten als Systemausgabe, wenn die gemischten Bilddaten Graustufen-Bilddaten aufweisen, und zum Auswählen der verbesserten Graustufen-Bilddaten, wenn die gemischten Bilddaten Binärbilddaten sind.

6. System nach einem der Ansprüche 1 - 5 in Kombination mit einem Graustufendrucker.

7. System nach einem der Ansprüche 1 - 5 in Kombination mit einem Graustufen-Display.

8. Verfahren zur Kantenverbesserung von Binärbilddaten mit folgenden Schritten:

- Speichern einer eine Vielzahl von Pixelstellen aufweisenden Binär-Bitmap-Bilddatei;
- Bestimmen eines Gradientenwerts, der jeder Pixelstelle der Binär-Bitmap-Bilddatei entspricht;

**gekennzeichnet durch** folgende Schritte:

- Bestimmen, im Bestimmungsschritt, jeweils eines Werts für die Gradientengröße und eines anderen für die Gradientenrichtung, welche jeder Pixelstelle in der Binär-Bitmap-Bilddatei entspricht;
- Vergleichen eines Fensters der Binär-Bitmap-Bilddatei und der Gradientenwerte, die einer Vielzahl von Pixelstellen innerhalb des Fensters entsprechen, mit vorbestimmten Merkmalsgruppen; und
- Durchführen von Kantenverbesserungen der Binärbilddaten in Abhängigkeit vom Vergleichsschritt, um verbesserte Graustufen-Bilddaten für die zu berücksichtigende Pixelstelle zu erzeugen.

9. Verfahren nach Anspruch 8, gekennzeichnet durch das Erzeugen einer Wertetabellen-Adresse in Abhängigkeit vom Vergleichsschritt und das Erzeugen verbesserter Graustufen-Bilddaten aus der Wertetabelle.

10. Verfahren nach Anspruch 8 oder 9, gekennzeichnet durch das Drehen eines Fensters in eine vorbestimmte Bezugsrichtung in Abhängigkeit von der Gradientenrichtungsinformation, die der zu berücksichtigenden Pixelstelle entspricht.

11. Verfahren nach Anspruch 8, 9 oder 10, dadurch gekennzeichnet, daß bestimmt wird, ob die zu berücksichtigende Pixelstelle ein schwarzes oder weißes Pixel ist, ob die zu berücksichtigende Pixelstelle in einer ein Pixel breiten Zeile liegt, und wo die zu berücksichtigende Pixelstelle relativ zu einer Knickstelle liegt.

12. Verfahren nach einem der Ansprüche 8 - 11, gekennzeichnet durch folgende Schritte:

- Speichern von aus Binärbilddaten und Graustufen-Bilddaten bestehenden gemischten Bilddaten;
- Sortieren der gemischten Bilddaten, um sortierte Binärbilddaten zu erzeugen;
- Auswählen der gemischten Bilddaten als Systemausgabe, wenn die gemischten Bilddaten Graustufen-Bilddaten aufweisen; und
- Auswählen der verbesserten Graustufen-Bilddaten als Systemausgabe, wenn die gemischten Bilddaten Binärbilddaten sind.

13. Verfahren nach einem der Ansprüche 8 - 12, gekennzeichnet durch das Drucken der verbesserten Daten mit einem Graustufendrucker.

14. Verfahren nach einem der Ansprüche 8 - 12, gekennzeichnet durch das Wiedergeben der verbesserten Daten auf einem Graustufen-Display.

**Revendications**

1. Système de traitement de l'image comprenant un dispositif (10) pour mémoriser un fichier binaire d'image en mode point contenant une pluralité de coordonnées de pixel représentant un bord d'une image à améliorer ; des dispositifs de détermination du gradient (12,14,16,22,24) pour déterminer une valeur de gradient correspondant à chaque coordonnées de pixel du fichier binaire d'image en mode point ; caractérisé en ce que les dispositifs de détermination du gradient déterminent une valeur respective pour l'amplitude du gradient et une valeur respective différente pour l'orientation du gradient correspondant à chaque coordonnées de pixel du fichier binaire d'image en mode point ; un dispositif matriciel de décision (28) permettant de comparer une fenêtre du fichier binaire d'image en mode point à des ensembles de critères prédéterminés ; la fenêtre contenant les coordonnées du pixel considéré pour le rendu des demi-teintes et les coordonnées de plusieurs pixels adjacents, et les valeurs de gradient correspondant aux coordonnées de plusieurs pixels dans ladite fenêtre ; et un dispositif, répondant audit dispositif matriciel de décision, et permettant d'effectuer une amélioration des bords au niveau des données d'images binaires afin de générer des données améliorées d'images en demi-teintes pour les coordonnées du pixel considéré.

2. Système selon la revendication 1, dans lequel ledit dispositif matriciel de décision génère une adresse de table de consultation en réponse à ladite comparaison et ledit dispositif permettant d'améliorer les données d'images en demi-teintes est une table de consultation (30).

3. Système selon la revendication 1 ou 2, dans lequel le dispositif matriciel de décision (28) comprend un moyen permettant de faire tourner une fenêtre selon une direction de référence prédéterminée en réponse aux informations relatives à l'orientation du gradient correspondant aux coordonnées du pixel considéré.

4. Système selon la revendication 1, 2 ou 3, dans lequel le dispositif matriciel de décision détermine si les coordonnées des pixels considérés sont situées dans une ligne dont la largeur correspond à un seul pixel, et l'emplacement des coordonnées des pixels considérés par rapport à un noeud.

5. Système selon l'une quelconque des revendications 1 à 4, comprenant un dispositif pour mémoriser des données d'images mixtes comprenant des données d'images binaires et des données d'images en demi-teintes ; un dispositif pour trier les données d'images mixtes afin de générer des données d'images binaires triées ; et un dispositif pour sélectionner les données d'images mixtes comme données de sortie du système de traitement de l'image si les données d'images mixtes contiennent des données d'images en demi-teintes et pour sélectionner les données améliorées d'images en demi-teintes si les données d'images mixtes sont des données d'images binaires.

6. Système selon l'une quelconque des revendications 1 à 5, associé à une imprimante en demi-teintes.

7. Système selon l'une quelconque des revendications 1 à 5, associé à un dispositif d'affichage en demi-teintes.

8. Procédé pour obtenir une amélioration des bords au niveau des données d'images binaires comprenant les étapes de mémorisation d'un fichier binaire d'image en mode point contenant une pluralité de coordonnées de pixel ; la détermination d'une valeur de gradient correspondant à chaque coordonnées de pixel du fichier binaire d'image en mode point ; caractérisé en ce que, dans l'étape de détermination, une valeur respective d'amplitude du gradient est déterminée et une valeur respective différente pour l'orientation du gradient est déterminée, correspondant à chaque coordonnées de pixel du fichier binaire d'image en mode point ; la comparaison d'une fenêtre du fichier binaire d'image en mode point et des valeurs de gradient correspondant à plusieurs coordonnées de pixel dans ladite fenêtre à des ensembles de critères prédéterminés ; et en réponse à la comparaison, la réalisation d'une amélioration des bords au niveau des données d'images binaires pour générer des données améliorées d'images en demi-teintes pour les coordonnées du pixel considéré.

9. Procédé selon la revendication 8, comprenant la génération d'une adresse de table de consultation en réponse à ladite comparaison et la génération de données améliorées d'images en demi-teintes à partir de ladite table de consultation.

10. Procédé selon la revendication 8 ou 9, comprenant l'étape de rotation d'une fenêtre selon une direction de référence prédéterminée en réponse aux informations relatives à l'orientation du gradient correspondant aux coordonnées du pixel considéré.

11. Procédé selon la revendication 8, 9 ou 10, dans lequel on détermine si les coordonnées du pixel considéré correspondent à un pixel noir ou blanc, si les coordonnées des pixels considérés se situent dans une ligne dont la largeur correspond à un seul pixel et dans lequel on détermine l'emplacement des coordonnées du pixel considéré par rapport à un noeud.

12. Procédé selon l'une quelconque des revendications 8 à 11, comprenant l'étape de mémorisation des données d'images mixtes contenant des données d'images binaires et des données d'images en demi-teintes ; le tri des données d'images mixtes pour générer des données d'images binaires triées ; la sélection des données d'images mixtes comme données de sortie si les données d'images mixtes comprennent des données d'images en demi-teintes ; et la sélection des données améliorées d'images en demi-teintes comme données de sortie du système si les données d'images mixtes sont des données d'images binaires.

13. Procédé selon l'une quelconque des revendications 8 à 12, comprenant l'étape d'impression des données améliorées à l'aide d'une imprimante en demi-teintes.

14. Procédé selon l'une quelconque des revendications 8 à 12, comprenant l'étape de visualisation des données améliorées par un dispositif d'affichage en demi-teintes.

FIG. 1

| 2A | 2B |
|----|----|
| 2C | 2D |

| 0 | 0 | 0 | 0 | 0 | 0 | 0 | 0 | 0 |
|---|---|---|---|---|---|---|---|---|
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 255 | 255 | 255 | 255 | 255 | 255 | 255 | 255 | 255 |
| 255 | 255 | 255 | 255 | 255 | 255 | 255 | 255 | 255 |
| 255 | 255 | 255 | 0 | 0 | 0 | 0 | 0 | 255 |
| 255 | 255 | 0 | 0 | 0 | 0 | 0 | 0 | 0 |
| 255 | 255 | 0 | 0 | 0 | 0 | 0 | 0 | 0 |
| 255 | 0 | 0 | 0 | 0 | 0 | 0 | 0 | 0 |
| 255 | 0 | 0 | 0 | 0 | 0 | 0 | 0 | 0 |
| 255 | 0 | 0 | 0 | 0 | 0 | 0 | 0 | 0 |
| 255 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 255 |
| 0 | 0 | 0 | 0 | 0 | 255 | 255 | 255 | 255 |
| 255 | 255 | 255 | 255 | 255 | 255 | 255 | 255 | 255 |
| 255 | 255 | 255 | 255 | 255 | 255 | 255 | 255 | 0 |
| 0 | 0 | 0 | 255 | 255 | 255 | 255 | 255 | 0 |

# FIG. 2A

| 0 | 0 | 0 | 0 | 0 | 0 | 0 | 0 | 0 | 0 |
|---|---|---|---|---|---|---|---|---|---|
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 255 | 255 | 0 | 0 | 0 | 0 | 0 | 0 | 0 | 0 |
| 255 | 255 | 255 | 255 | 0 | 0 | 0 | 0 | 0 | 0 |
| 255 | 255 | 255 | 255 | 255 | 0 | 0 | 0 | 0 | 0 |
| 0 | 255 | 255 | 255 | 255 | 255 | 0 | 0 | 0 | 0 |
| 0 | 255 | 255 | 255 | 255 | 255 | 0 | 0 | 0 | 0 |
| 0 | 0 | 255 | 255 | 255 | 255 | 255 | 0 | 0 | 0 |
| 0 | 0 | 255 | 255 | 255 | 255 | 255 | 0 | 0 | 0 |
| 0 | 0 | 255 | 255 | 255 | 255 | 255 | 0 | 0 | 0 |
| 0 | 0 | 255 | 255 | 255 | 255 | 255 | 0 | 0 | 0 |
| 0 | 0 | 255 | 255 | 255 | 255 | 255 | 0 | 0 | 0 |
| 0 | 255 | 255 | 255 | 255 | 255 | 0 | 0 | 0 | 0 |
| 0 | 255 | 255 | 255 | 255 | 255 | 0 | 0 | 0 | 0 |
| 255 | 255 | 255 | 255 | 255 | 0 | 0 | 0 | 0 | 0 |
| 255 | 255 | 255 | 255 | 0 | 0 | 0 | 0 | 0 | 0 |
| 255 | 255 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |

FIG. 2B

| 0 | 0 | 0 | 255 | 255 | 255 | 255 | 255 | 0 |
|---|---|---|-----|-----|-----|-----|-----|---|
| 0 | 0 | 0 | 255 | 255 | 255 | 255 | 255 | 255 |
| 0 | 0 | 0 | 0 | 255 | 255 | 255 | 255 | 255 |
| 0 | 0 | 0 | 0 | 255 | 255 | 255 | 255 | 255 |
| 0 | 0 | 0 | 0 | 255 | 255 | 255 | 255 | 255 |
| 0 | 0 | 0 | 0 | 0 | 255 | 255 | 255 | 255 |
| 0 | 0 | 0 | 0 | 0 | 255 | 255 | 255 | 255 |
| 0 | 0 | 0 | 0 | 0 | 0 | 255 | 255 | 255 |
| 0 | 0 | 0 | 0 | 0 | 0 | 255 | 255 | 255 |
| 0 | 0 | 0 | 0 | 0 | 0 | 255 | 255 | 255 |
| 0 | 0 | 0 | 0 | 0 | 0 | 0 | 255 | 255 |
| 0 | 0 | 0 | 0 | 0 | 0 | 0 | 255 | 255 |
| 0 | 0 | 0 | 0 | 0 | 0 | 0 | 255 | 255 |
| 0 | 0 | 0 | 0 | 0 | 0 | 0 | 0 | 255 |
| 0 | 0 | 0 | 0 | 0 | 0 | 0 | 0 | 255 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |

FIG. 2C

| 0 | 0 | 0 | 0 | 0 | 0 | 0 | 0 | 0 | 0 |
|---|---|---|---|---|---|---|---|---|---|
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 255 | 0 | 0 | 0 | 0 | 0 | 0 | 0 | 0 | 0 |
| 255 | 0 | 0 | 0 | 0 | 0 | 0 | 0 | 0 | 0 |
| 255 | 0 | 0 | 0 | 0 | 0 | 0 | 0 | 0 | 0 |
| 255 | 255 | 0 | 0 | 0 | 0 | 0 | 0 | 0 | 0 |
| 255 | 255 | 0 | 0 | 0 | 0 | 0 | 0 | 0 | 0 |
| 255 | 255 | 255 | 0 | 0 | 0 | 0 | 0 | 0 | 0 |
| 255 | 255 | 255 | 0 | 0 | 0 | 0 | 0 | 0 | 0 |
| 255 | 255 | 255 | 0 | 0 | 0 | 0 | 0 | 0 | 0 |
| 255 | 255 | 255 | 255 | 0 | 0 | 0 | 0 | 0 | 0 |
| 255 | 255 | 255 | 255 | 255 | 0 | 0 | 0 | 0 | 0 |
| 255 | 255 | 255 | 255 | 255 | 255 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |

# FIG. 2D

| | | | | |
|---|---|---|---|
| 3A | 3B |
| 3C | 3D |

| | | | | | | | | |
|---|---|---|---|---|---|---|---|---|
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 806 | 1020 | 1020 | 1020 | 1020 | 1020 | 1020 | 1020 | 1020 |
| 1062 | 1020 | 1020 | 1020 | 1020 | 1020 | 1020 | 1020 | 1020 |
| 1020 | 0 | 361 | 806 | 1020 | 1020 | 1020 | 806 | 361 |
| 1020 | 361 | 1062 | 1140 | 1020 | 1020 | 1020 | 1140 | 1140 |
| 1020 | 806 | 1140 | 361 | 0 | 0 | 0 | 361 | 806 |
| 806 | 1140 | 806 | 0 | 0 | 0 | 0 | 0 | 0 |
| 361 | 1140 | 361 | 0 | 0 | 0 | 0 | 0 | 0 |
| 0 | 1020 | 0 | 0 | 0 | 0 | 0 | 0 | 0 |
| 0 | 1020 | 0 | 0 | 0 | 0 | 0 | 0 | 0 |
| 510 | 806 | 0 | 0 | 0 | 0 | 0 | 0 | 0 |
| 510 | 361 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 361 |
| 0 | 0 | 0 | 0 | 0 | 0 | 0 | 361 | 1062 |
| 0 | 0 | 0 | 0 | 361 | 806 | 1020 | 1140 | 1062 |
| 806 | 1020 | 1020 | 1020 | 1140 | 1140 | 1020 | 806 | 0 |
| 1062 | 1020 | 1020 | 1020 | 806 | 361 | 0 | 361 | 1062 |
| 1062 | 1020 | 806 | 361 | 0 | 0 | 0 | 806 | 1140 |
| 806 | 1020 | 1062 | 806 | 0 | 0 | 0 | 1020 | 1020 |

# FIG. 3A

| | | | | | | | | | |
|---|---|---|---|---|---|---|---|---|---|
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 1020 | 806 | 361 | 0 | 0 | 0 | 0 | 0 | 0 | 0 |
| 1020 | 1140 | 1140 | 806 | 361 | 0 | 0 | 0 | 0 | 0 |
| 0 | 361 | 806 | 1140 | 1062 | 361 | 0 | 0 | 0 | 0 |
| 806 | 361 | 0 | 361 | 1062 | 1062 | 361 | 0 | 0 | 0 |
| 1020 | 806 | 0 | 0 | 361 | 1140 | 806 | 0 | 0 | 0 |
| 806 | 1140 | 361 | 0 | 0 | 806 | 1140 | 361 | 0 | 0 |
| 361 | 1140 | 806 | 0 | 0 | 361 | 1140 | 806 | 0 | 0 |
| 0 | 1020 | 1020 | 0 | 0 | 0 | 1020 | 1020 | 0 | 0 |
| 0 | 1020 | 1020 | 0 | 0 | 0 | 1020 | 1020 | 0 | 0 |
| 0 | 1020 | 1020 | 0 | 0 | 0 | 1020 | 1020 | 0 | 0 |
| 361 | 1140 | 806 | 0 | 0 | 361 | 1140 | 806 | 0 | 0 |
| 806 | 1140 | 361 | 0 | 0 | 806 | 1140 | 361 | 0 | 0 |
| 1140 | 806 | 0 | 0 | 361 | 1140 | 806 | 0 | 0 | 0 |
| 1062 | 361 | 0 | 361 | 1062 | 1062 | 361 | 0 | 0 | 0 |
| 361 | 361 | 806 | 1140 | 1062 | 361 | 0 | 0 | 0 | 0 |
| 806 | 1140 | 1140 | 806 | 361 | 0 | 0 | 0 | 0 | 0 |
| 1140 | 806 | 361 | 0 | 0 | 0 | 0 | 0 | 0 | 0 |
| 361 | 0 | 0 | 0 | 0 | 0 | 0 | 0 | 0 | 0 |
| 0 | 0 | 0 | 0 | 0 | 0 | 0 | 0 | 0 | 0 |

# FIG. 3B

| | | | | | | | | |
|---|---|---|---|---|---|---|---|---|
| 0 | 0 | 1020 | 1020 | 0 | 0 | 0 | 806 | 1140 |
| 0 | 0 | 806 | 1140 | 361 | 0 | 0 | 361 | 1140 |
| 0 | 0 | 361 | 1140 | 806 | 0 | 0 | 0 | 1020 |
| 0 | 0 | 0 | 1020 | 1020 | 0 | 0 | 0 | 806 |
| 0 | 0 | 0 | 806 | 1140 | 361 | 0 | 0 | 361 |
| 0 | 0 | 0 | 361 | 1140 | 806 | 0 | 0 | 0 |
| 0 | 0 | 0 | 0 | 806 | 1140 | 361 | 0 | 0 |
| 0 | 0 | 0 | 0 | 361 | 1140 | 806 | 0 | 0 |
| 0 | 0 | 0 | 0 | 0 | 1020 | 1020 | 0 | 0 |
| 0 | 0 | 0 | 0 | 0 | 806 | 1140 | 361 | 0 |
| 0 | 0 | 0 | 0 | 0 | 361 | 1140 | 806 | 0 |
| 0 | 0 | 0 | 0 | 0 | 0 | 1020 | 1020 | 0 |
| 0 | 0 | 0 | 0 | 0 | 0 | 806 | 1140 | 361 |
| 0 | 0 | 0 | 0 | 0 | 0 | 361 | 1140 | 806 |
| 0 | 0 | 0 | 0 | 0 | 0 | 0 | 806 | 1020 |
| 0 | 0 | 0 | 0 | 0 | 0 | 0 | 361 | 806 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |

## FIG. 3C

| | | | | | | | | | |
|---|---|---|---|---|---|---|---|---|---|
| 361 | 0 | 0 | 0 | 0 | 0 | 0 | 0 | 0 | 0 |
| 806 | 0 | 0 | 0 | 0 | 0 | 0 | 0 | 0 | 0 |
| 1020 | 0 | 0 | 0 | 0 | 0 | 0 | 0 | 0 | 0 |
| 1140 | 361 | 0 | 0 | 0 | 0 | 0 | 0 | 0 | 0 |
| 1140 | 806 | 0 | 0 | 0 | 0 | 0 | 0 | 0 | 0 |
| 1020 | 1020 | 0 | 0 | 0 | 0 | 0 | 0 | 0 | 0 |
| 806 | 1140 | 361 | 0 | 0 | 0 | 0 | 0 | 0 | 0 |
| 361 | 1140 | 806 | 0 | 0 | 0 | 0 | 0 | 0 | 0 |
| 0 | 806 | 1140 | 361 | 0 | 0 | 0 | 0 | 0 | 0 |
| 0 | 361 | 1140 | 806 | 0 | 0 | 0 | 0 | 0 | 0 |
| 0 | 0 | 1020 | 1020 | 0 | 0 | 0 | 0 | 0 | 0 |
| 0 | 0 | 806 | 1140 | 361 | 0 | 0 | 0 | 0 | 0 |
| 0 | 0 | 361 | 1062 | 1062 | 361 | 0 | 0 | 0 | 0 |
| 0 | 0 | 0 | 361 | 1062 | 1062 | 361 | 0 | 0 | 0 |
| 1020 | 1020 | 1020 | 1020 | 806 | 806 | 510 | 0 | 0 | 0 |
| 1020 | 1020 | 1020 | 1020 | 1020 | 806 | 361 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |

FIG. 3D

| | |
|---|---|
| 4A | 4B |
| 4C | 4D |

| | | | | | | | | |
|---|---|---|---|---|---|---|---|---|
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 252 | 270 | 270 | 270 | 270 | 270 | 270 | 270 | 270 |
| 225 | 270 | 270 | 270 | 270 | 270 | 270 | 270 | 270 |
| 180 | 0 | 45 | 72 | 90 | 90 | 90 | 106 | 135 |
| 180 | 45 | 45 | 63 | 90 | 90 | 90 | 117 | 117 |
| 180 | 18 | 27 | 45 | 0 | 0 | 0 | 135 | 106 |
| 162 | 27 | 18 | 0 | 0 | 0 | 0 | 0 | 0 |
| 135 | 27 | 45 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 90 | 18 | 0 | 0 | 0 | 0 | 0 | 0 | 0 |
| 90 | 45 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 225 |
| 0 | 0 | 0 | 0 | 0 | 0 | 0 | 225 | 225 |
| 0 | 0 | 0 | 0 | 225 | 252 | 270 | 243 | 225 |
| 252 | 270 | 270 | 270 | 243 | 243 | 270 | 252 | 0 |
| 225 | 270 | 270 | 270 | 252 | 225 | 0 | 45 | 45 |
| 135 | 90 | 106 | 135 | 0 | 0 | 0 | 18 | 27 |
| 106 | 90 | 135 | 162 | 0 | 0 | 0 | 0 | 0 |

# FIG. 4A

| | | | | | | | | | |
|---|---|---|---|---|---|---|---|---|---|
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 270 | 265 | 315 | 0 | 0 | 0 | 0 | 0 | 0 | 0 |
| 270 | 297 | 297 | 268 | 315 | 0 | 0 | 0 | 0 | 0 |
| 0 | 316 | 266 | 297 | 315 | 315 | 0 | 0 | 0 | 0 |
| 106 | 135 | 0 | 315 | 315 | 315 | 315 | 0 | 0 | 0 |
| 136 | 162 | 0 | 0 | 315 | 333 | 342 | 0 | 0 | 0 |
| 162 | 153 | 135 | 0 | 0 | 342 | 333 | 315 | 0 | 0 |
| 135 | 153 | 162 | 0 | 0 | 315 | 333 | 342 | 0 | 0 |
| 0 | 180 | 180 | 0 | 0 | 0 | 0 | 0 | 0 | 0 |
| 0 | 180 | 180 | 0 | 0 | 0 | 0 | 0 | 0 | 0 |
| 0 | 180 | 180 | 0 | 0 | 0 | 0 | 0 | 0 | 0 |
| 225 | 207 | 196 | 0 | 0 | 45 | 27 | 16 | 0 | 0 |
| 196 | 207 | 225 | 0 | 0 | 16 | 27 | 45 | 0 | 0 |
| 207 | 196 | 0 | 0 | 45 | 27 | 16 | 0 | 0 | 0 |
| 225 | 225 | 0 | 45 | 45 | 45 | 45 | 0 | 0 | 0 |
| 225 | 45 | 72 | 63 | 45 | 45 | 0 | 0 | 0 | 0 |
| 72 | 63 | 63 | 72 | 45 | 0 | 0 | 0 | 0 | 0 |
| 63 | 72 | 45 | 0 | 0 | 0 | 0 | 0 | 0 | 0 |
| 45 | 0 | 0 | 0 | 0 | 0 | 0 | 0 | 0 | 0 |
| 0 | 0 | 0 | 0 | 0 | 0 | 0 | 0 | 0 | 0 |

FIG. 4B

| | | | | | | | | |
|---|---|---|---|---|---|---|---|---|
| 0 | 0 | 180 | 180 | 0 | 0 | 0 | 342 | 333 |
| 0 | 0 | 162 | 153 | 135 | 0 | 0 | 315 | 333 |
| 0 | 0 | 135 | 153 | 162 | 0 | 0 | 0 | 0 |
| 0 | 0 | 0 | 180 | 180 | 0 | 0 | 0 | 342 |
| 0 | 0 | 0 | 162 | 153 | 135 | 0 | 0 | 315 |
| 0 | 0 | 0 | 135 | 153 | 162 | 0 | 0 | 0 |
| 0 | 0 | 0 | 0 | 162 | 153 | 135 | 0 | 0 |
| 0 | 0 | 0 | 0 | 135 | 153 | 162 | 0 | 0 |
| 0 | 0 | 0 | 0 | 0 | 180 | 180 | 0 | 0 |
| 0 | 0 | 0 | 0 | 0 | 162 | 153 | 135 | 0 |
| 0 | 0 | 0 | 0 | 0 | 135 | 153 | 162 | 0 |
| 0 | 0 | 0 | 0 | 0 | 0 | 180 | 180 | 0 |
| 0 | 0 | 0 | 0 | 0 | 0 | 162 | 153 | 135 |
| 0 | 0 | 0 | 0 | 0 | 0 | 135 | 153 | 162 |
| 0 | 0 | 0 | 0 | 0 | 0 | 0 | 162 | 135 |
| 0 | 0 | 0 | 0 | 0 | 0 | 0 | 135 | 106 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |

FIG. 4C

| 315 | 0 | 0 | 0 | 0 | 0 | 0 | 0 | 0 | 0 |
|---|---|---|---|---|---|---|---|---|---|
| 342 | 0 | 0 | 0 | 0 | 0 | 0 | 0 | 0 | 0 |
| 0 | 0 | 0 | 0 | 0 | 0 | 0 | 0 | 0 | 0 |
| 333 | 315 | 0 | 0 | 0 | 0 | 0 | 0 | 0 | 0 |
| 333 | 342 | 0 | 0 | 0 | 0 | 0 | 0 | 0 | 0 |
| 0 | 0 | 0 | 0 | 0 | 0 | 0 | 0 | 0 | 0 |
| 342 | 333 | 315 | 0 | 0 | 0 | 0 | 0 | 0 | 0 |
| 315 | 333 | 342 | 0 | 0 | 0 | 0 | 0 | 0 | 0 |
| 0 | 342 | 333 | 315 | 0 | 0 | 0 | 0 | 0 | 0 |
| 0 | 315 | 333 | 342 | 0 | 0 | 0 | 0 | 0 | 0 |
| 0 | 0 | 0 | 0 | 0 | 0 | 0 | 0 | 0 | 0 |
| 0 | 0 | 342 | 333 | 315 | 0 | 0 | 0 | 0 | 0 |
| 0 | 0 | 315 | 315 | 315 | 315 | 0 | 0 | 0 | 0 |
| 0 | 0 | 0 | 315 | 315 | 315 | 315 | 0 | 0 | 0 |
| 90 | 90 | 90 | 90 | 72 | 16 | 0 | 0 | 0 | 0 |
| 90 | 90 | 90 | 90 | 90 | 72 | 45 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |

FIG. 4D

INPUT
9X9
WINDOW

ROTATE
WINDOW
BASED ON
gd

IS
CENTER
PIXEL OF
WINDOW LOCATED
ON A SINGLE
PIXEL LINE
BASED ON
gd

YES → SET FLAG=1

NO

IS
CENTER
PIXEL BLACK
V15=15

YES → B

NO → C

FIG. 5A

FIG. 5B

FIG. 5C

FIG. 6

FIG. 9

FIG. 7

FIG. 10

FIG. 8

FIG. 11

| | | |
|---|---|---|
| 15 | 15 | 0 |
| 15 | 15 | 0 |
| 15 | 15 | 0 |
| 15 | 15 | 0 |
| 15 | 0 | 0 |

FIG. 12

| | | |
|---|---|---|
| 0 | 5 | 6 |
| 0 | 5 | 5 |
| 0 | 5 | 5 |
| 6 | 6 | 5 |
| 5 | 6 | 6 |

FIG. 13

| | | |
|---|---|---|
| 0 | 47 | 67 |
| 0 | 60 | 60 |
| 0 | 60 | 60 |
| 21 | 67 | 47 |
| 47 | 67 | 21 |

FIG. 14

| | | |
|---|---|---|
| 0 | 15 | 15 |
| 0 | 15 | 15 |
| 0 | 15 | 15 |
| 0 | 15 | 15 |
| 0 | 0 | 15 |

FIG. 15

| | | |
|---|---|---|
| 6 | 5 | 0 |
| 5 | 5 | 0 |
| 5 | 5 | 0 |
| 5 | 6 | 6 |
| 6 | 6 | 5 |

FIG. 16

| | | |
|---|---|---|
| 67 | 47 | 0 |
| 60 | 60 | 0 |
| 60 | 60 | 0 |
| 47 | 67 | 21 |
| 27 | 67 | 47 |

FIG. 17

| | | |
|---|---|---|
| 0 | 15 | 15 |
| 0 | 15 | 15 |
| 0 | 15 | 15 |
| 0 | 15 | 15 |
| 0 | 0 | 15 |

FIG. 18

| | | |
|---|---|---|
| 2 | 3 | 0 |
| 3 | 3 | 0 |
| 3 | 3 | 0 |
| 3 | 2 | 2 |
| 2 | 2 | 3 |

FIG. 19

| | | |
|---|---|---|
| 67 | 47 | 0 |
| 60 | 60 | 0 |
| 60 | 60 | 0 |
| 47 | 67 | 21 |
| 21 | 67 | 47 |

FIG. 20

| | | |
|---|---|---|
| 0 | 0 | 15 |
| 0 | 15 | 15 |
| 0 | 15 | 15 |
| 0 | 15 | 15 |
| 0 | 15 | 15 |

FIG. 21

| | | V41 | V21 | V11 | V31 | V51 | | |
|---|---|---|---|---|---|---|---|---|
| | | | V22 | V12 | V32 | | | |
| | | | V23 | V13 | V33 | | | |
| | | V44 | V24 | V14 | V34 | V54 | | |
| | | V45 | V25 | V15 | V35 | V55 | | |
| | | V46 | V26 | V16 | V36 | V56 | | |
| | | | V27 | V17 | V37 | | | |
| | | | V28 | V18 | V38 | | | |
| | | V49 | V29 | V19 | V39 | V59 | | |

FIG. 22

| | | | | | | | | |
|---|---|---|---|---|---|---|---|---|
| | | | | | | | | |
| | | | | | | | | |
| | | | | d14 | | | | |
| | | | d25 | d15 | d35 | | | |
| | | | | d16 | | | | |
| | | | | | | | | |
| | | | | | | | | |
| | | | | | | | | |

FIG. 23

| | | | | | | | | |
|---|---|---|---|---|---|---|---|---|
| | | | | | | | | |
| | | | | | | | | |
| | | | | a14 | | | | |
| | | | | a15 | | | | |
| | | | | a16 | | | | |
| | | | | | | | | |
| | | | | | | | | |
| | | | | | | | | |

FIG. 24

FIG. 25

| | | | | | | V23 | |
| --- | --- | --- | --- | --- | --- | --- | --- |
| | | | | V44 | V24 | V13 | V33 |
| | | | V45 | V25 | V14 | V34 | · |
| | | V46 | V26 | V15 | V35 | V54 | |
| | | V27 | V16 | V36 | V55 | | |
| | | V17 | V37 | V56 | | | |

FIG. 26

| | | | | d25 | d14 | | |
| --- | --- | --- | --- | --- | --- | --- | --- |
| | | | | d15 | d35 | | |
| | | | d16 | | | | |

FIG. 27

| | | | | | a14 | · | |
| --- | --- | --- | --- | --- | --- | --- | --- |
| | | | | a15 | | | |
| | | | a16 | | | | |

| | | | | | | | |
|---|---|---|---|---|---|---|---|
| | | | | | | | |
| V49 | | | V46 | V45 | V44 | | | V41 |
| V29 | V28 | V27 | V26 | V25 | V24 | V23 | V22 | V21 |
| V19 | V18 | V17 | V16 | V15 | V14 | V13 | V12 | V11 |
| V39 | V38 | V37 | V36 | V35 | V34 | V33 | V32 | V31 |
| V59 | | | V56 | V55 | V54 | | | V51 |
| | | | | | | | |
| | | | | | | | |

## FIG. 28

| | | | | | | | | |
|---|---|---|---|---|---|---|---|---|
| | | | | | | | | |
| | | | | | | | | |
| | | | | d25 | | | | |
| | | | d16 | d15 | d14 | | | |
| | | | | d35 | | | | |
| | | | | | | | | |
| | | | | | | | | |
| | | | | | | | | |
| | | | | | | | | |

## FIG. 29

| | | | | | | | | |
|---|---|---|---|---|---|---|---|---|
| | | | | | | | | |
| | | | | | | | | |
| | | | | | | | | |
| | | | a16 | a15 | a14 | | | |
| | | | | | | | | |
| | | | | | | | | |
| | | | | | | | | |
| | | | | | | | | |

## FIG. 30

## FIG. 31

| | | V23 | | | | | | |
|---|---|---|---|---|---|---|---|---|
| | V33 | V13 | V24 | V44 | | | | |
| | | V34 | V14 | V25 | V45 | | | |
| | | V54 | V35 | V15 | V26 | V46 | | |
| | | | V55 | V36 | V16 | V27 | | |
| | | | | V56 | V37 | V17 | | |
| | | | | | | | | |
| | | | | | | | | |

## FIG. 32

| | | | | | | | | |
|---|---|---|---|---|---|---|---|---|
| | | | | | | | | |
| | | | | | | | | |
| | | | d14 | d25 | | | | |
| | | | d35 | d15 | | | | |
| | | | | | d16 | | | |
| | | | | | | | | |
| | | | | | | | | |
| | | | | | | | | |

## FIG. 33

| | | | | | | | | |
|---|---|---|---|---|---|---|---|---|
| | | | | | | | | |
| | | | | | | | | |
| | | | a14 | | | | | |
| | | | | a15 | | | | |
| | | | | | a16 | | | |
| | | | | | | | | |
| | | | | | | | | |
| | | | | | | | | |

| | | V51 | V31 | V11 | V21 | V41 | | |
|---|---|---|---|---|---|---|---|---|
| | | | V32 | V12 | V22 | | | |
| | | | V33 | V13 | V23 | | | |
| | | V54 | V34 | V14 | V24 | V44 | | |
| | | V55 | V35 | V15 | V25 | V45 | | |
| | | V56 | V36 | V16 | V26 | V46 | | |
| | | | V37 | V17 | V27 | | | |
| | | | V38 | V18 | V28 | | | |
| | | V59 | V39 | V19 | V29 | V49 | | |

FIG. 34

| | | | | | | | | |
|---|---|---|---|---|---|---|---|---|
| | | | | | | | | |
| | | | | | | | | |
| | | | | | | | | |
| | | | | d14 | | | | |
| | | | d35 | d15 | d25 | | | |
| | | | | d16 | | | | |
| | | | | | | | | |
| | | | | | | | | |
| | | | | | | | | |

FIG. 35

| | | | | | | | | |
|---|---|---|---|---|---|---|---|---|
| | | | | | | | | |
| | | | | | | | | |
| | | | | | | | | |
| | | | | a14 | | | | |
| | | | | a15 | | | | |
| | | | | a16 | | | | |
| | | | | | | | | |
| | | | | | | | | |
| | | | | | | | | |

FIG. 36

| | | | | | | V33 | | |
|---|---|---|---|---|---|---|---|---|
| | | | | V54 | V34 | V13 | V23 | |
| | | | V55 | V35 | V14 | V24 | · | |
| | | V56 | V36 | V15 | V25 | V44 | | |
| | V37 | V16 | V26 | V45 | | | | |
| | V17 | V27 | V46 | | | | | |
| | | | | | | | | |
| | | | | | | | | |

FIG. 37

| | | | | | | | | |
|---|---|---|---|---|---|---|---|---|
| | | | | | | | | |
| | | | | | | | | |
| | | | | d35 | d14 | | | |
| | | | | d15 | d25 | | | |
| | | | d16 | | | | | |
| | | | | | | | | |
| | | | | | | | | |
| | | | | | | | | |
| | | | | | | | | |

FIG. 38

| | | | | | | | | |
|---|---|---|---|---|---|---|---|---|
| | | | | | | | | |
| | | | | | | | | |
| | | | | | a14 | | | |
| | | | | a15 | | | | |
| | | | a16 | | | | | |
| | | | | | | | | |
| | | | | | | | | |
| | | | | | | | | |
| | | | | | | | | |

FIG. 39

| | | | | | | | | |
|---|---|---|---|---|---|---|---|---|
| | | | | | | | | |
| V59 | | | V56 | V55 | V54 | | | V51 |
| V39 | V38 | V37 | V36 | V35 | V34 | V33 | V32 | V31 |
| V19 | V18 | V17 | V16 | V15 | V14 | V13 | V12 | V11 |
| V29 | V28 | V27 | V26 | V25 | V24 | V23 | V22 | V21 |
| V49 | | | V46 | V45 | V44 | | | V41 |
| | | | | | | | | |
| | | | | | | | | |

## FIG. 40

| | | | | | | | | |
|---|---|---|---|---|---|---|---|---|
| | | | | | | | | |
| | | | | | | | | |
| | | | | d35 | | | | |
| | | | d16 | d15 | d14 | | | |
| | | | | d25 | | | | |
| | | | | | | | | |
| | | | | | | | | |
| | | | | | | | | |
| | | | | | | | | |

## FIG. 41

| | | | | | | | | |
|---|---|---|---|---|---|---|---|---|
| | | | | | | | | |
| | | | | | | | | |
| | | | | | | | | |
| | | | a16 | a15 | a14 | | | |
| | | | | | | | | |
| | | | | | | | | |
| | | | | | | | | |
| | | | | | | | | |
| | | | | | | | | |

## FIG. 42

FIG. 43

FIG. 44

FIG. 45

| 0 | 0 | 0 | 0 | 0 | 0 | 0 | 0 |
|---|---|---|---|---|---|---|---|
| 0 | 0 | 0 | 0 | 0 | 0 | 0 | 0 |
| 0 | 0 | 0 | 0 | 0 | 0 | 0 | 0 |
| 15 | 15 | 15 | 0 | 0 | 0 | 0 | 0 |
| 0 | 0 | 0 | 15 | (15) | 15 | 15 | 15 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

FIG. 46

| 0 | 0 | 1 | 0 | 5 | 0 | 0 | 0 |
|---|---|---|---|---|---|---|---|
| 0 | 0 | 1 | 0 | 5 | 0 | 0 | 0 |
| 0 | 0 | 1 | 0 | 5 | 0 | 0 | 0 |
| 0 | 2 | 1 | 0 | 5 | 0 | 0 | 0 |
| 0 | 1 | 2 | 5 | 6 | 0 | 0 | 0 |
| 0 | 1 | 0 | 5 | 0 | 0 | 0 | 0 |
| 0 | 1 | 0 | 5 | 0 | 0 | 0 | 0 |
| 0 | 1 | 0 | 5 | 0 | 0 | 0 | 0 |

FIG. 49

| 0 | 0 | 0 | 0 | 0 | 0 | 0 | 0 |
|---|---|---|---|---|---|---|---|
| 0 | 0 | 0 | 0 | 0 | 0 | 0 | 0 |
| 3 | 3 | 3 | 4 | 0 | 0 | 0 | 0 |
| 0 | 0 | 4 | 3 | 3 | 3 | 3 | 3 |
| 7 | 7 | 7 | 8 | 0 | 0 | 0 | 0 |
| 0 | 0 | 8 | 7 | 7 | 7 | 7 | 7 |
| 0 | 0 | 0 | 0 | 0 | 0 | 0 | 0 |
| 0 | 0 | 0 | 0 | 0 | 0 | 0 | 0 |

FIG. 47

| 15 | 15 | 7 |
|---|---|---|
| 15 | 15 | 5 |
| 15 | 11 | 0 |
| 15 | 9 | 0 |
| 15 | 7 | 0 |

FIG. 50

| 0 | 0 | 0 | 15 | 0 | 0 | 0 | 0 |
|---|---|---|---|---|---|---|---|
| 0 | 0 | 0 | 15 | 0 | 0 | 0 | 0 |
| 0 | 0 | 0 | 15 | 0 | 0 | 0 | 0 |
| 0 | 0 | 0 | 15 | 0 | 0 | 0 | 0 |
| 0 | 0 | 15 | 0 | 0 | 0 | 0 | 0 |
| 0 | 0 | (15) | 0 | 0 | 0 | 0 | 0 |
| 0 | 0 | 15 | 0 | 0 | 0 | 0 | 0 |
| 0 | 0 | 15 | 0 | 0 | 0 | 0 | 0 |

FIG. 48

FIG. 51

| 13 | 14 | 13 |
|----|----|----|
| 14 | 15 | 14 |
| 13 | 14 | 13 |

## FIG. 52

| 0 | 0 | 0 |
|---|----|---|
| 0 | 15 | 0 |
| 0 | 0 | 0 |

## FIG. 53

| 0 | 0 | 15 |
|---|----|----|
| 0 | 15 | 15 |
| 0 | 15 | 15 |

## FIG. 54

| 0 | 0 | 0 | 15 | 0 | 0 | 0 | 0 |
|---|---|----|----|---|---|---|---|
| 0 | 0 | 0 | 15 | 0 | 0 | 0 | 0 |
| 0 | 0 | 0 | 15 | 0 | 0 | 0 | 0 |
| 0 | 0 | 15 | 15 | 0 | 0 | 0 | 0 |
| 0 | 0 | 15 | 0 | 0 | 0 | 0 | 0 |
| 0 | 0 | 15 | 0 | 0 | 0 | 0 | 0 |
| 0 | 0 | 15 | 0 | 0 | 0 | 0 | 0 |
| 0 | 0 | 15 | 0 | 0 | 0 | 0 | 0 |

## FIG. 55